(19) Europäisches Patentamt
European Patent Office
Office européen des brevets

(11) **EP 4 075 789 B1**

(12) **EUROPEAN PATENT SPECIFICATION**

(45) Date of publication and mention
of the grant of the patent:
**15.07.2026 Bulletin 2026/29**

(21) Application number: **21744897.6**

(22) Date of filing: **08.01.2021**

(51) International Patent Classification (IPC):
***H04N 23/698*** (2023.01)

(52) Cooperative Patent Classification (CPC):
**H04N 23/698**

(86) International application number:
**PCT/JP2021/000445**

(87) International publication number:
**WO 2021/149509 (29.07.2021 Gazette 2021/30)**

(54) **IMAGING DEVICE, IMAGING METHOD, AND PROGRAM**

BILDGEBUNGSVORRICHTUNG, BILDGEBUNGSVERFAHREN UND PROGRAMM

DISPOSITIF D'IMAGERIE, PROCÉDÉ D'IMAGERIE ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2020 JP 2020008936**

(43) Date of publication of application:
**19.10.2022 Bulletin 2022/42**

(73) Proprietor: **Sony Group Corporation**
**Tokyo 108-0075 (JP)**

(72) Inventors:
• **TANAKA, Hisao**
  **Tokyo 108-0075 (JP)**
• **ITAKURA, Eisaburo**
  **Tokyo 108-0075 (JP)**
• **OKA, Shinichi**
  **Tokyo 108-0075 (JP)**
• **SEIMIYA, Hiroshi**
  **Tokyo 108-0075 (JP)**

(74) Representative: **D Young & Co LLP**
**3 Noble Street**
**London EC2V 7BQ (GB)**

(56) References cited:
WO-A1-2011/096136       JP-A- 2005 100 367
JP-A- 2010 177 921       US-A1- 2019 220 963

• DHAMO HELISA ET AL: "Peeking behind objects:
Layered depth prediction from a single image",
PATTERN RECOGNITION LETTERS, ELSEVIER,
AMSTERDAM, NL, vol. 125, 6 May 2019
(2019-05-06), pages 333 - 340, XP085785283,
ISSN: 0167-8655, [retrieved on 20190506], DOI:
10.1016/J.PATREC.2019.05.007
• WENXIU SUN ET AL: "An overview of free
viewpoint Depth-Image-Based Rendering (DIBR)
ion/xam", 14 December 2010 (2010-12-14), pages
1 - 8, XP007921284, Retrieved from the Internet
<URL:http://ihome.ust.hk/~eeshine/files/
sun_apsipa10.pdf> [retrieved on 20121114]
• NASEER TAYYAB ET AL: "Deep regression for
monocular camera-based 6-DoF global
localization in outdoor environments", 2017
IEEE/RSJ INTERNATIONAL CONFERENCE ON
INTELLIGENT ROBOTS AND SYSTEMS (IROS),
IEEE, 24 September 2017 (2017-09-24), pages
1525 - 1530, XP033266108, DOI: 10.1109/
IROS.2017.8205957

EP 4 075 789 B1

**Description**

TECHNICAL FIELD

The present technology relates to an imaging apparatus, an imaging method, and a program, and particularly relates to, for example, an imaging apparatus, an imaging method, and a program capable of easily obtaining an image captured from a desired position.

BACKGROUND ART

For example, Patent Document 1 describes, as a technique for obtaining a virtual image captured from a virtual virtual imaging position different from an actual imaging position, a technique of imaging a subject from various imaging positions using a large number of imaging apparatuses and generating highly accurate three-dimensional data from the captured images obtained by imaging.

CITATION LIST

PATENT DOCUMENT

Patent Document 1: Japanese Patent Application Laid-Open No. 2019-103126

SUMMARY OF THE INVENTION

PROBLEMS TO BE SOLVED BY THE INVENTION

In the technique described in Patent Document 1, it is necessary to arrange a large number of imaging apparatuses at various positions. Therefore, there are many cases where the technique cannot be easily achieved due to the cost, the labor required for installation, and the like of the imaging apparatuses.
Furthermore, in a case where a large number of imaging apparatuses are arranged, it is necessary to consider that a certain imaging apparatus is captured by another imaging apparatus or that the subject does not hit the imaging apparatus when the subject is a moving object, and the imaging apparatuses cannot be necessarily installed at any positions.
The present technology has been made in view of such circumstances to easily obtain an image captured from a desired position.

Prior art includes:
DHAMO HELISA ET AL: "Peeking behind objects: Layered depth prediction from a single image", PATTERN RECOGNITION LETTERS< ELSEVIER, AMSTERDAM, NL, vol. 125, 6 May 2019, pages 333-340; and

US 2019/220963 A1.
Each of these prior art disclosures describes a prior art device.

SOLUTIONS TO PROBLEMS

Embodiments of the present disclosure are defined by the appended claims.

BRIEF DESCRIPTION OF DRAWINGS

Fig. 1 is a diagram illustrating an example of an imaging situation.
Fig. 2 is a diagram illustrating an example of an imaging situation and a captured image captured in the imaging situation.
Fig. 3 is a diagram illustrating another example of an imaging situation and a captured image captured in the imaging situation.
Fig. 4 is a diagram illustrating another example of an imaging situation.
Fig. 5 is a diagram illustrating a captured image obtained by imaging a person and a building from above in front of the person.

EP 4 075 789 B1

Fig. 6 is a top diagram illustrating an example of an imaging situation in which imaging from a position of a long distance from a person cannot be performed.

Fig. 7 is a diagram describing perspective projection transformation when imaging is performed by an imaging apparatus.

Fig. 8 is a diagram illustrating an example of an imaging situation of imaging a subject existing on a single object plane.

Fig. 9 is a top diagram illustrating a state of wide-angle imaging of imaging a subject from an imaging position close to the subject using a wide-angle lens.

Fig. 10 is a top diagram illustrating a state of telephoto imaging of imaging a subject from an imaging position far from the subject using a telephoto lens.

Fig. 11 is a diagram describing an example of a process of obtaining a virtual image.

Fig. 12 is a diagram illustrating an example of an imaging situation in a case where subjects exist on a plurality of object planes.

Fig. 13 is a top diagram illustrating a state of wide-angle imaging of imaging a subject from an imaging position close to the subject using a wide-angle lens.

Fig. 14 is a top diagram illustrating a state of telephoto imaging of imaging a subject from an imaging position far from the subject using a telephoto lens.

Fig. 15 is a diagram illustrating a state of short-distance imaging and a captured image obtained by the short-distance imaging.

Fig. 16 is a diagram illustrating a state of long-distance imaging and a captured image obtained by the long-distance imaging.

Fig. 17 is a top diagram illustrating a state of imaging.

Fig. 18 is a diagram describing mapping of pixel values in a case of generating a virtual image obtained by long-distance imaging, which is virtual imaging, on the basis of a captured image obtained by short-distance imaging, which is actual imaging.

Fig. 19 is another diagram describing mapping of pixel values in a case of generating a virtual image obtained by long-distance imaging, which is virtual imaging, on the basis of a captured image obtained by short-distance imaging, which is actual imaging.

Fig. 20 is a diagram describing an example of an occlusion portion complementing method that complements a pixel of an occlusion portion.

Fig. 21 is a diagram describing another example of a process of obtaining a virtual image obtained by virtual imaging on the basis of information obtained by actual imaging.

Fig. 22 is a plan diagram illustrating an example of a captured image and a virtual image.

Fig. 23 is a diagram describing a method of expressing a virtual imaging position in a case of performing virtual imaging.

Fig. 24 is a plan diagram illustrating an example of a UI operated in a case where a user designates a virtual imaging position.

Fig. 25 is a block diagram illustrating a configuration example of an embodiment of an imaging apparatus to which the present technology has been applied.

Fig. 26 is a flowchart describing an example of processing of a generation unit.

Fig. 27 is a block diagram illustrating a configuration example of an embodiment of a computer to which the present technology has been applied.

MODE FOR CARRYING OUT THE INVENTION

<Relationship between imaging distance and captured image>

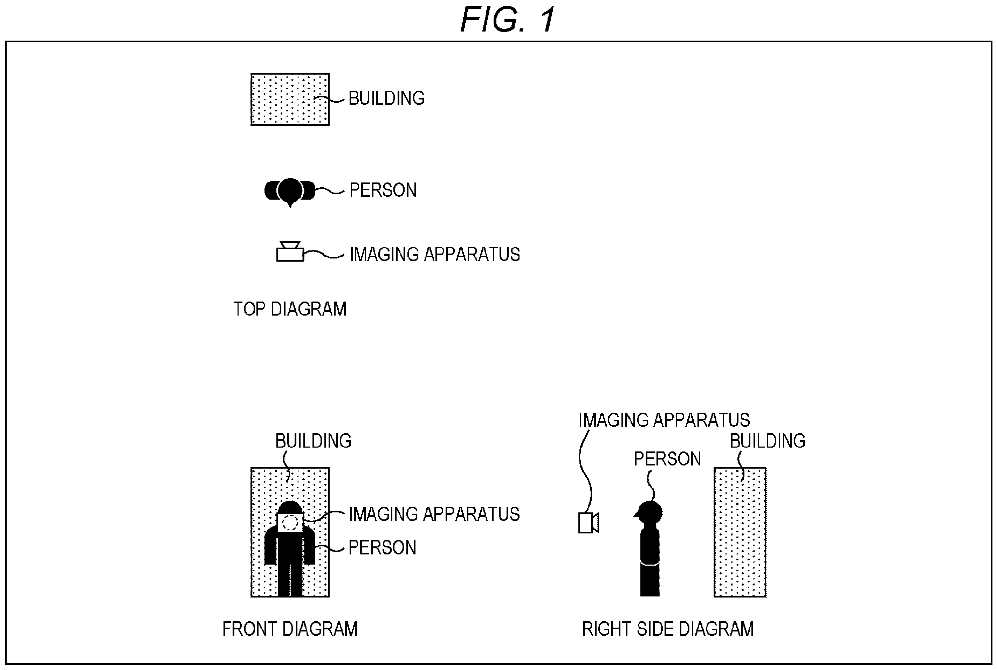

Fig. 1 is a diagram illustrating an example of an imaging situation by an imaging apparatus.

In Fig. 1, the imaging situation is illustrated by third angle projection.

In Fig. 1, a person stands in front of a building when viewed from the imaging apparatus side, and the person and the building are imaged by the imaging apparatus from the front side of the person.

Hereinafter, an image (captured image) actually captured by the imaging apparatus in the imaging situation of Fig. 1 will be described.

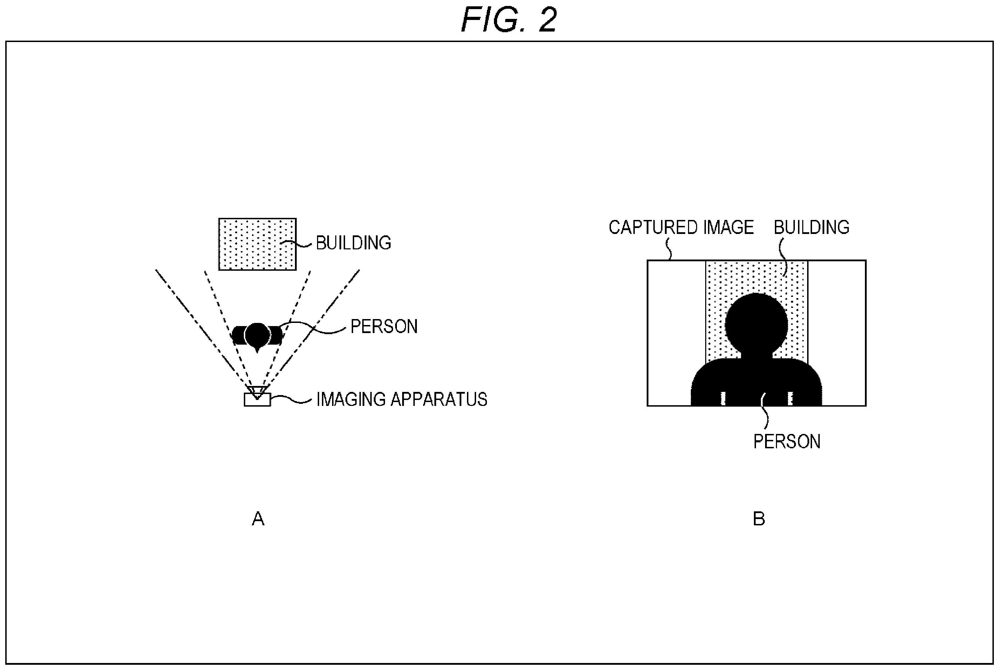

Fig. 2 is a diagram illustrating an example of an imaging situation of the imaging apparatus and a captured image captured in the imaging situation.

A of Fig. 2 is a top diagram illustrating an imaging situation, and B of Fig. 2 illustrates a captured image captured in the imaging situation of A of Fig. 2.

In A of Fig. 2, the two-dot chain lines indicate an angle of view of the imaging apparatus, and a space within the angle of view is imaged by the imaging apparatus. In A of Fig. 2, the broken lines indicate an angle of view occupied by a person who is a main subject (main subject).

In the imaging situation of A of Fig. 2, the distance between the person and the building is a relatively long distance with respect to the distance (imaging distance) between the imaging apparatus and the person when imaging is performed by the imaging apparatus. Therefore, actually, the width of the building existing behind the person is wider than the width of the person, but in the captured image, the width of the building appears narrower than the width of the person. This is because a distant object looks small by so-called perspective.

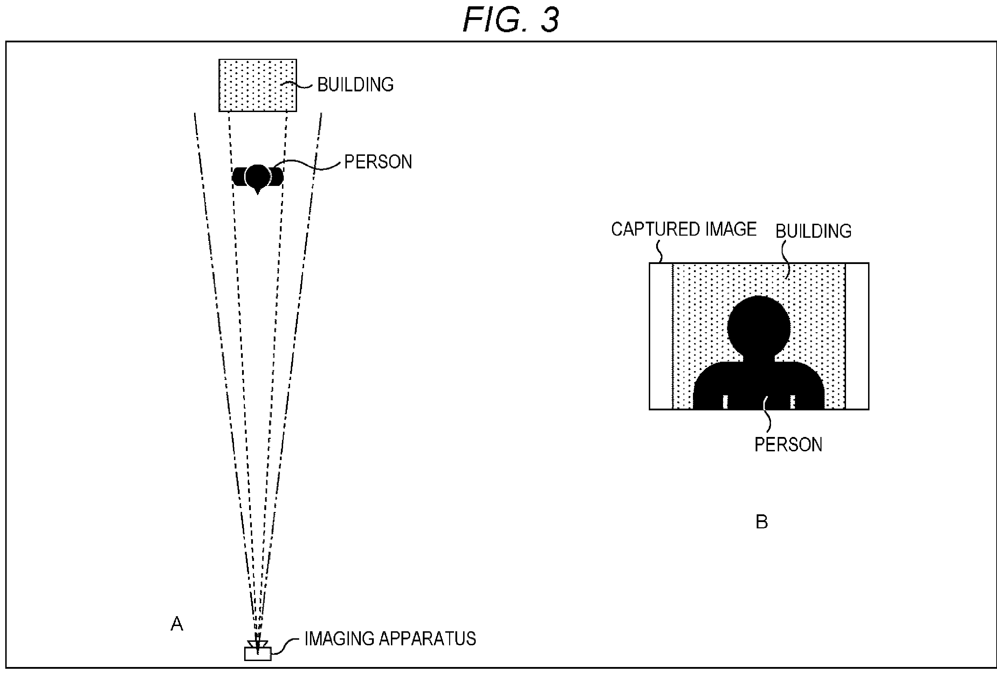

Fig. 3 is a diagram illustrating another example of an imaging situation of the imaging apparatus and a captured image captured in the imaging situation.

A of Fig. 3 is a top diagram illustrating an imaging situation, and B of Fig. 3 illustrates a captured image captured in the imaging situation of A of Fig. 3.

In A of Fig. 3, similarly to A of Fig. 2, the two-dot chain lines indicate an angle of view of the imaging apparatus, and the broken lines indicate an angle of view occupied by the person.

In A of Fig. 3, the person and the building, which are the same subjects as in A of Fig. 2, are imaged from an imaging position farther from the subject using a telephoto lens with a narrow angle of view (or a zoom lens with a long focal distance) than in the case of A of Fig. 2.

In the imaging situation of A of Fig. 3, as illustrated in B of Fig. 3, a captured image in which the width of the building appears to be wider than the width of the person is captured, similarly to the actual situation. This is because, in the imaging situation of A of Fig. 3, the imaging distance between the imaging apparatus and the person is larger than that in the case of A of Fig. 2, the distance between the person and the building becomes relatively small, and the perspective is reduced.

As described above, even in the imaging of the same subjects (person and building), the content (composition) of the obtained captured image differs depending on the imaging distance between the subject and the imaging apparatus.

The fact that (the content of) the captured image differs depending on the imaging distance has an important meaning in video representation. In a simple example, in a case where it is desired to obtain an image with a landscape such as vast mountains as a background, it is necessary to capture an image by approaching the subject using a wide-angle lens. On the other hand, in a case where it is desired to obtain an image in which a miscellaneous background is not captured as much as possible, it is necessary to capture an image away from the subject using a more telephoto lens.

Note that, in principle, when imaging is performed from infinity, the ratio of the sizes of the person and the building appearing in the captured image is equal to the actual ratio. Therefore, in building applications, academic applications, and the like, in order to obtain a captured image correctly reflecting the ratio of the actual size, it is necessary to perform imaging from a farther distance.

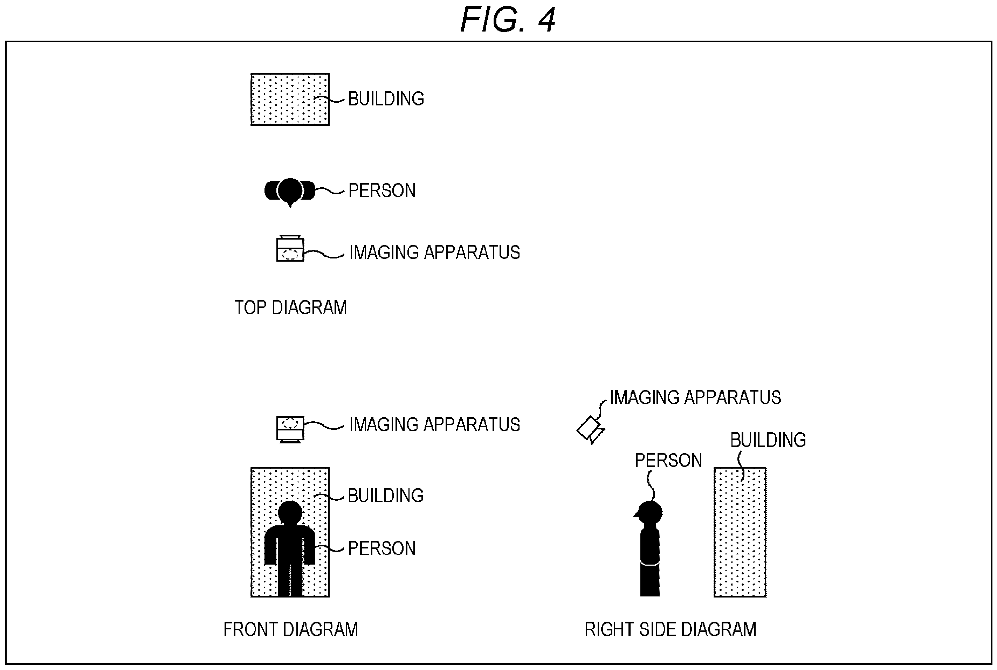

Fig. 4 is a diagram illustrating another example of an imaging situation by an imaging apparatus.

In Fig. 4, similarly to Fig. 1, the imaging situation is illustrated by third angle projection.

In the imaging situation of Fig. 1, the optical axis direction of the imaging apparatus substantially coincides with the direction from the person to the building. In this case, as illustrated in B of Fig. 2 and B of Fig. 3, the captured image captured by the imaging apparatus is an image in which the sense of distance between the person and the building is hardly expressed.

In Fig. 4, the person and the building are imaged from above in front of the person with the optical axis of the imaging apparatus facing the person. In this case, the optical axis direction of the imaging apparatus is a direction different from the direction from the person to the building, and the captured image expressing the sense of distance between the person and the building can be obtained.

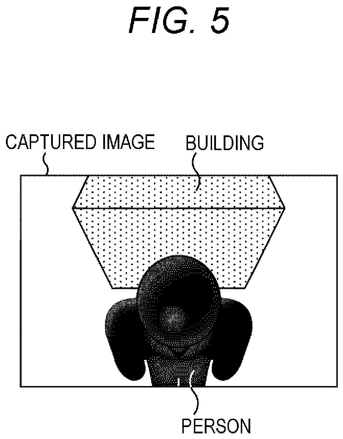

Fig. 5 is a diagram illustrating a captured image obtained by imaging a person and a building from above in front of the person.

By imaging the person and the building from above in front of the person with the optical axis of the imaging apparatus facing the person, it is possible to obtain a bird's-eye view image expressing the sense of distance between the person and the building in which the person and the building are looked down from above as a captured image.

In order to perform video representation according to a purpose, it is required to capture images of a subject from various positions.

However, in reality, imaging is not necessarily performed from a free position. For example, even in a case where it is desired to capture an image from a position of a long distance from a person as in A of Fig. 3, in reality, there is a case where imaging from a position of a long distance from a person cannot be performed.

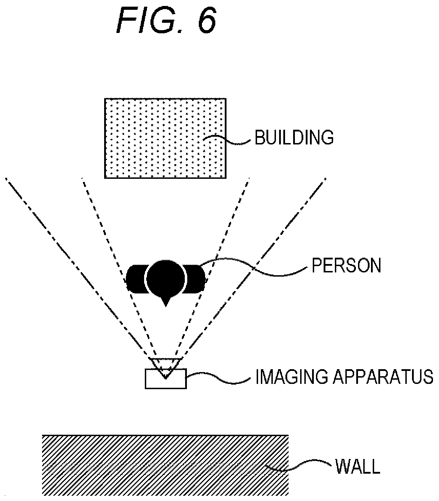

Fig. 6 is a top diagram illustrating an example of an imaging situation in which imaging from a position of a long distance from a person cannot be performed.

In Fig. 6, a wall exists on the front side of the person. Therefore, in a case where the person is imaged from the front, since the imaging apparatus cannot be physically moved to the back side of the wall surface on the front side of the person, the person cannot be imaged from a long distance position.

Furthermore, as illustrated in Fig. 4, in a case where the person and the building are imaged from above in front of the person, imaging can be performed from above to some extent by using a tripod or a stepladder. However, in the case of using a tripod or a stepladder, imaging can be performed from only a few meters above at most. Moreover, mobility at an imaging site is reduced by using a tripod or a stepladder.

In recent years, an image can be captured from almost immediately above a subject by using a drone, but a flight time of the drone and eventually an imaging time are limited according to the capacity of a battery mounted on the drone.

Furthermore, the operation of the drone is not necessarily easy, and is affected by weather such as rain and wind outdoors. Moreover, the drone cannot be used in a place where the flight of the drone is restricted or a place where the flight of the drone is prohibited due to concentration of people.

In the present technology, even in a case where a free imaging position cannot be taken, an image obtained by imaging a subject from a desired position can be easily obtained. In the present technology, for example, from the captured image in B of Fig. 2 captured in the imaging situation in A of Fig. 2, it is possible to generate an image obtained by imaging the subject from the imaging position in the imaging situation in, for example, A of Fig. 3 or Fig. 5.

Note that Patent Document 1 describes a technique of generating a virtual image obtained by (seemingly) imaging the subject from an arbitrary virtual virtual imaging position from three-dimensional data generated by imaging a subject from various imaging positions using a large number of imaging apparatuses and using the captured images obtained by the imaging.

However, in the technology described in Patent Document 1, it is necessary to arrange a large number of imaging apparatuses at various positions, and it is often impossible to easily realize the imaging situation as described in Patent Document 1 due to the cost, the labor required for installation, and the like of the imaging apparatuses.

Moreover, in a case where a large number of imaging apparatuses are arranged, it is necessary to prevent a certain imaging apparatus from being captured by another imaging apparatus or it is necessary to consider that the subject does not hit the imaging apparatus when the subject is a moving object. Therefore, it is not always possible to install the imaging apparatuses at an arbitrary position.

In the present technology, from a captured image obtained by imaging a subject from an imaging position, a virtual image obtained by imaging the subject from a virtual imaging position different from the imaging position is generated by using distance information from the imaging position to the subject and coping model information. Therefore, in the present technology, it is possible to easily obtain a virtual image obtained by imaging a subject from a desired virtual imaging position without installing a large number of imaging apparatuses.

Hereinafter, a method of generating a virtual image obtained by imaging a subject from a desired virtual imaging position from a captured image obtained by imaging the subject from a certain imaging position will be described. The method of generating a virtual image obtained by imaging a subject from a desired virtual imaging position from a captured image obtained by imaging the subject from a certain imaging position is, for example, a method of generating, as a virtual image, a captured image captured from an imaging position at a long distance from the subject using a telephoto lens as in the imaging situation of A of Fig. 3 from a captured image captured from an imaging position at a short distance from the subject using a wide-angle lens (or a zoom lens with a short focal distance) as in the imaging situation of A of Fig. 2.

<Perspective projection transformation>

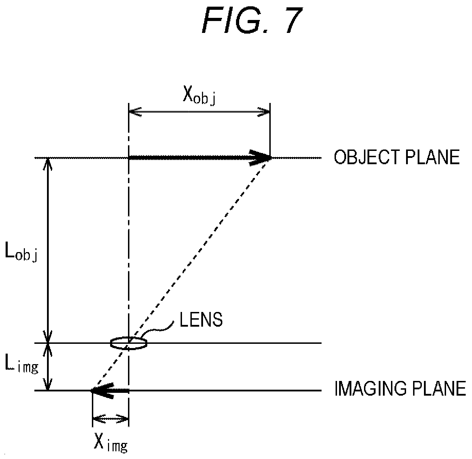

Fig. 7 is a diagram describing perspective projection transformation when imaging is performed by an imaging apparatus.

Fig. 7 illustrates a relationship between an actual subject on an object plane where the subject exists and an image on an imaging plane of an image sensor that performs photoelectric conversion of the imaging apparatus.

Note that Fig. 7 is a top diagram of a subject standing vertically on the ground surface as viewed from above, and the horizontal direction represents a position in a horizontal direction (lateral direction) horizontal to the ground surface. The following description is similarly applied to a perpendicular direction (vertical direction) perpendicular to the ground surface, which is represented by a side diagram of a subject standing vertically on the ground surface as viewed from the side.

The distance from the object plane to the lens of the imaging apparatus (imaging distance between the subject on the object plane and the imaging apparatus) is referred to as an object distance, and is represented by $L_{obj}$. The distance from the lens to the imaging plane is referred to as an image distance, and is represented by $L_{img}$. The position on the object plane, that is, the distance from the optical axis of the imaging apparatus on the object plane is represented by $X_{obj}$. The position on the imaging plane, that is, the distance from the optical axis of the imaging apparatus on the imaging plane is represented by $X_{img}$.

Formula (1) holds for the object distance $L_{obj}$, the image distance $L_{img}$, the distance (position) $X_{obj}$, and the distance (position) $X_{img}$.

$$X_{img}/X_{obj} \; = \; L_{img}/L_{obj}$$

$$\ldots \; (1)$$

From Formula (1), the position $X_{img}$ on the imaging plane corresponding to the position $X_{obj}$ of the subject on the object plane can be represented by Formula (2).

$$X_{img} = L_{img}/L_{obj} \times X_{obj}$$

$$\ldots \ (2)$$

Formula (2) represents transformation called a perspective projection transformation.

The perspective projection transformation of Formula (2) is performed so to speak physically (optically) at the time of actual imaging of the subject by the imaging apparatus.

Furthermore, from Formula (1), the position $X_{obj}$ of the subject on the object plane corresponding to the position $X_{img}$ on the imaging plane can be represented by Formula (3).

$$X_{obj} = L_{obj}/L_{img} \times X_{img}$$

$$\ldots \ (3)$$

Formula (3) represents the inverse transformation of the perspective projection transformation (perspective projection inverse transformation).

In order to perform the perspective projection inverse transformation of Formula (3), the object distance $L_{obj}$, the image distance $L_{img}$, and the position $X_{img}$ of the subject on the imaging plane are required.

The imaging apparatus that images the subject can recognize (acquire) the image distance $L_{img}$ and the position $X_{img}$ of the subject on the imaging plane.

Therefore, in order to perform the perspective projection inverse transformation of Formula (3), it is necessary to recognize the object distance $L_{obj}$ (distance information) in some way.

In order to obtain the position $X_{obj}$ of the subject on the object plane with respect to each pixel of the imaging plane, the object distance $L_{obj}$ having a resolution in pixel units or close thereto is required.

As a method of obtaining the object distance $L_{obj}$, any method can be adopted. For example, a so-called stereo method of calculating a distance to a subject from parallax obtained by using a plurality of image sensors that performs photoelectric conversion can be adopted. Furthermore, for example, a method of irradiating the subject with a determined optical pattern and calculating the distance to the subject from the shape of the optical pattern projected on the subject can be adopted. Furthermore, a method called time of flight (ToF) for calculating the distance to the subject from the time from laser light irradiation to the return of reflected light from the subject can be adopted. Moreover, it is possible to adopt a method of calculating the distance to the subject using an image plane phase difference method, which is one of so-called autofocus methods. In addition, the distance to the subject can be calculated by combining a plurality of the above methods.

Hereinafter, on the assumption that the object distance $L_{obj}$ can be recognized by some method, a method of generating a virtual image obtained (that would be imaged) by imaging the subject from a virtual imaging position separated from the subject by a distance different from the actual object distance $L_{obj}$ by perspective projection transformation and perspective projection inverse transformation will be described.

<Virtual image generation method>

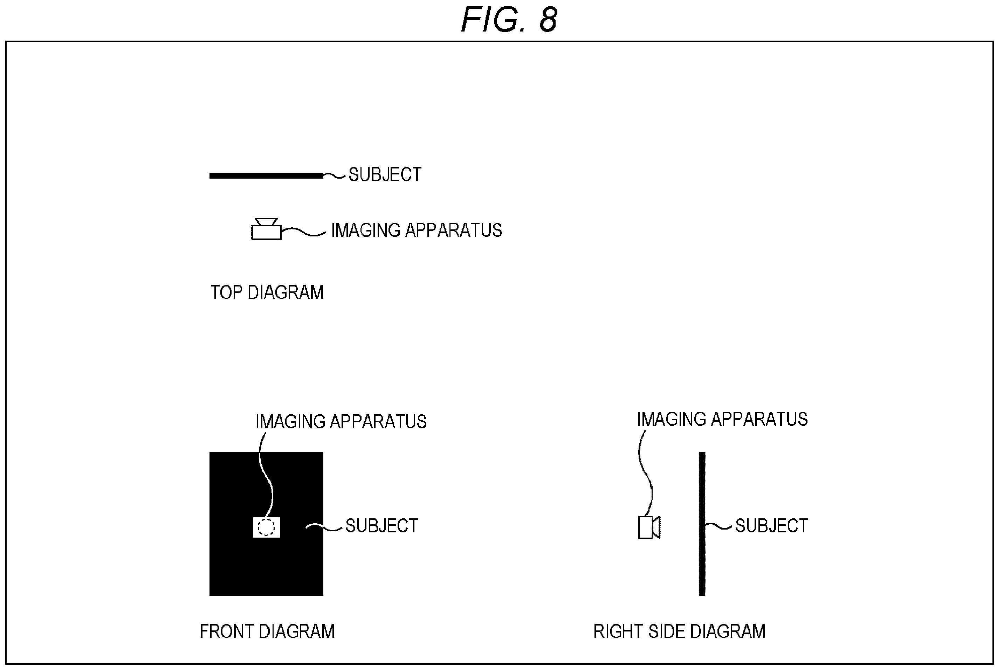

Fig. 8 is a diagram illustrating an example of an imaging situation of imaging a subject existing on a single object plane.

In Fig. 8, similarly to Fig. 1, the imaging situation is illustrated by third angle projection.

In the imaging situation of Fig. 8, the subject exists on a single object plane, and the object plane is parallel to the imaging plane of the imaging apparatus. Therefore, the object plane is orthogonal to the optical axis of the imaging apparatus.

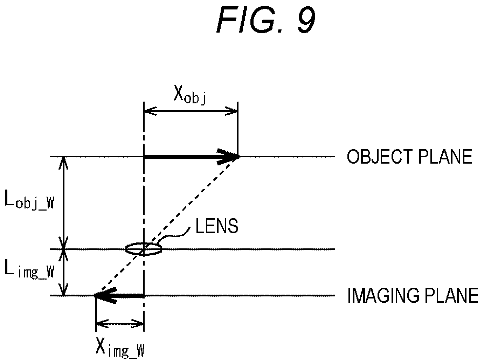

Fig. 9 is a top diagram illustrating a state of wide-angle imaging of imaging a subject from an imaging position close to the subject using a wide-angle lens in the imaging situation of Fig. 8.

In the wide-angle imaging of Fig. 9, a subject whose position on the object plane is $X_{obj}$ is imaged from an imaging position separated by an object distance $L_{obj\_W}$. The image distance at the time of wide-angle imaging is $L_{img\_W}$, and the position of the subject on the imaging plane is $X_{img\_W}$.

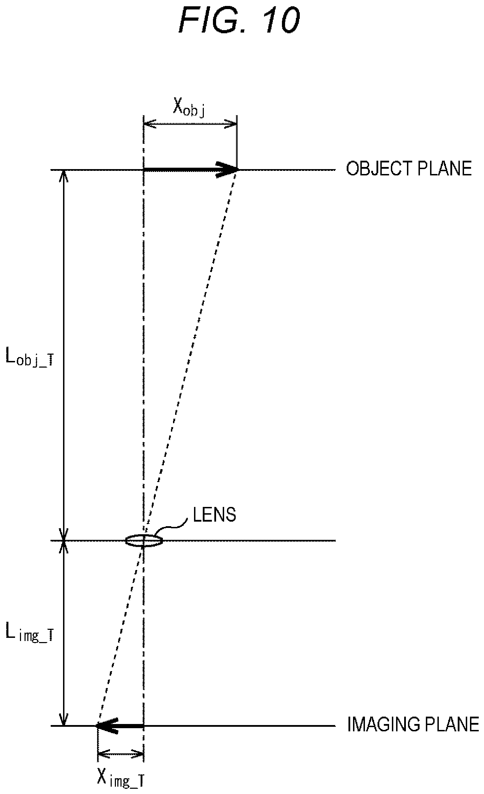

Fig. 10 is a top diagram illustrating a state of telephoto imaging of imaging a subject from an imaging position far from the subject using a telephoto lens in the imaging situation of Fig. 8.

In the telephoto imaging of Fig. 10, a subject whose position on the object plane is $X_{obj}$ and that is the same as in the case of the wide-angle imaging of Fig. 9 is imaged from an imaging position separated by an object distance $L_{obj\_T}$. The image distance at the time of telephoto imaging is $L_{img\_T}$, and the position of the subject on the imaging plane is $X_{img\_T}$.

When Formula (3) of the perspective projection inverse transformation is applied to the wide-angle imaging of Fig. 9, Formula (4) of the perspective projection inverse transformation can be obtained.

$$X_{obj} = L_{obj\_W}/L_{img\_W} \times X_{img\_W}$$

$$\cdots \quad (4)$$

When Formula (2) of the perspective projection transformation is applied to the telephoto imaging of Fig. 10, Formula (5) of the perspective projection transformation can be obtained.

$$X_{img\_T} = L_{img\_T}/L_{obj\_T} \times X_{obj}$$

$$\cdots \quad (5)$$

Formula (6) can be obtained by substituting $X_{obj}$ on the left side of Formula (4) into $X_{obj}$ on the right side of Formula (5).

$$X_{img\_T} = (L_{img\_T}/L_{obj\_T}) \times (L_{obj\_W}/L_{img\_W}) \times X_{img\_W}$$

$$\cdots \quad (6)$$

Here, a coefficient k is defined by Formula (7).

$$k = (L_{img\_T}/L_{obj\_T}) \times (L_{obj\_W}/L_{img\_W})$$

$$\cdots \quad (7)$$

Using Formula (7), Formula (6) can be a simple proportional expression of Formula (8).

$$X_{img\_T} = k \times X_{img\_W}$$

$$\cdots \quad (8)$$

By using Formula (8) (Formula (6)), it is possible to obtain the position $X_{img\_T}$ on the imaging plane in telephoto imaging using a telephoto lens, here, long-distance imaging from a long distance from the position $X_{img\_W}$ on the imaging plane in wide-angle imaging using a wide-angle lens, here, short-distance imaging from a short distance. In other words, in a case where it is assumed that imaging is performed in long-distance imaging on the basis of information such as a captured image obtained by actual imaging in short-distance imaging or the like, information of a virtual image that would be obtained by imaging in the long-distance imaging can be obtained.

Although the short-distance imaging using the wide-angle lens and the long-distance imaging using the telephoto lens have been described above as examples of imaging from imaging positions at different distances from the subject, the above description can be applied to a case where imaging at an arbitrary distance from the subject is performed using a lens with an arbitrary focal distance.

That is, according to Formula (8) (Formula (6)), on the basis of the information such as a captured image obtained by imaging from a certain imaging position or the like using a lens with a certain focal distance, information of a captured image (virtual image) obtained in a case where imaging from another imaging position (virtual imaging position) using a lens with another focal distance is performed can be obtained.

Here, since imaging from a certain imaging position using a lens with a certain focal distance is imaging that is actually performed, it is also referred to as actual imaging. On the other hand, since imaging from another imaging position (virtual imaging position) using a lens with another focal distance is not imaging that is actually performed, it is also referred to as virtual imaging.

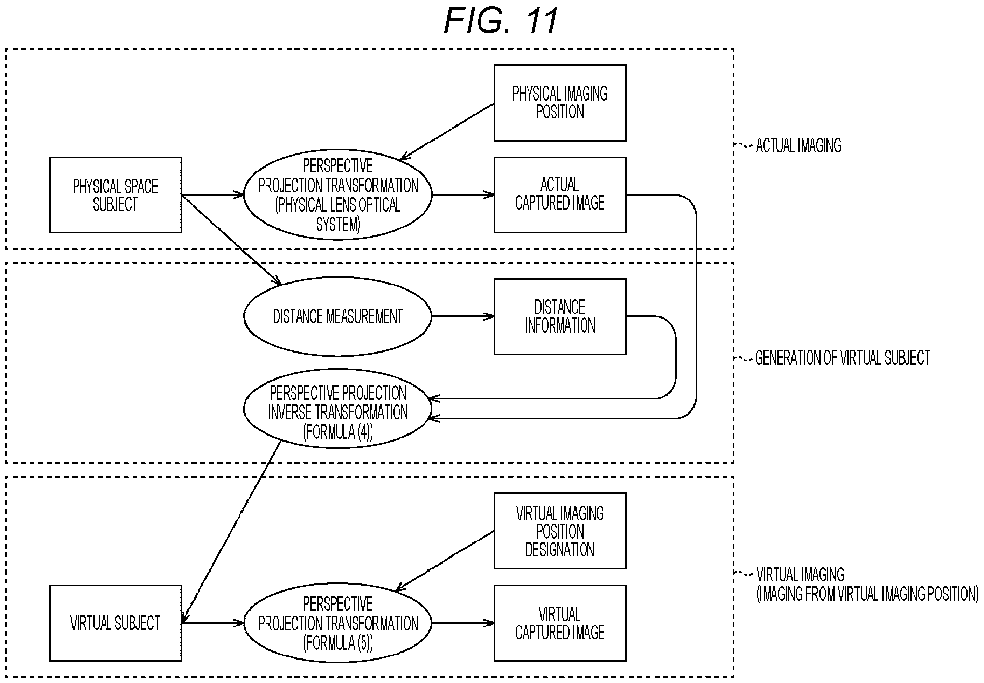

Fig. 11 is a diagram describing an example of a process of obtaining a virtual image obtained by virtual imaging on the basis of information obtained by actual imaging using Formula (8).

Here, a conceptual meaning of obtaining Formula (6) from Formulae (4) and (5) is as described below.

The position $X_{img\_W}$ of the subject on the imaging plane is a position of a point obtained by perspective projection of a point on the subject in a three-dimensional space on the imaging plane of the image sensor, which is a two-dimensional plane. The position $X_{obj}$ of the point on the subject in a three-dimensional space (object plane) can be obtained by performing the perspective projection inverse transformation of Formula (4) on the position $X_{img\_W}$ of the subject on the imaging plane.

By performing the perspective projection transformation of Formula (5) on the position $X_{obj}$ on the subject in a three-dimensional space obtained in this manner, it is possible to obtain information of a virtual image obtained in a case where imaging is performed from a virtual imaging position different from an imaging position separated from the subject by the object distance $L_{obj\_W}$, that is, a virtual imaging position separated from the subject by the object distance $L_{obj\_T}$.

Formula (6) is transformation from the position $X_{img\_W}$ on the imaging plane of the subject at the time of wide-angle imaging as a certain two-dimensional plane to the position $X_{img\_T}$ on the imaging plane of the subject at the time of telephoto imaging as another two-dimensional plane while the (variable indicating) position $X_{obj}$ of the point on the subject in the three-dimensional space is apparently removed. However, in the process of deriving Formula (6) from Formulae (4) and (5), the position $X_{obj}$ on the subject in the three-dimensional space is once determined.

As illustrated in Fig. 11, a process of obtaining a virtual image obtained by virtual imaging on the basis of information obtained by actual imaging includes actual imaging, generation of a virtual subject (model), and virtual imaging.

In actual imaging, a subject in a physical space (three-dimensional space) is subjected to the perspective projection transformation on an image sensor by an optical system (physical lens optical system) such as a physical lens or the like in an imaging apparatus, and a captured image (actual captured image) that is a two-dimensional image is generated. The perspective projection transformation in the actual imaging is optically performed using a physical imaging position (physical imaging position) of the imaging apparatus as a parameter.

In the generation of the virtual subject, the perspective projection inverse transformation of Formula (4) is performed by calculation on the captured image obtained by the actual imaging using distance information from the imaging position to the subject obtained separately by measurement or the like, and (the subject model of) the subject in the three-dimensional space is virtually reproduced (generated). The virtually reproduced subject is also referred to as a virtual subject (model).

In the virtual imaging, the perspective projection transformation of Formula (5) is performed by calculation on the virtual subject, so that the virtual subject is (virtually) imaged and a virtual image (virtual captured image) is generated. In the virtual imaging, a virtual imaging position at the time of imaging the virtual subject is designated as a parameter, and the virtual subject is imaged from the virtual imaging position.

<Positions of subjects on imaging plane in a case where subjects exist on a plurality of object planes>

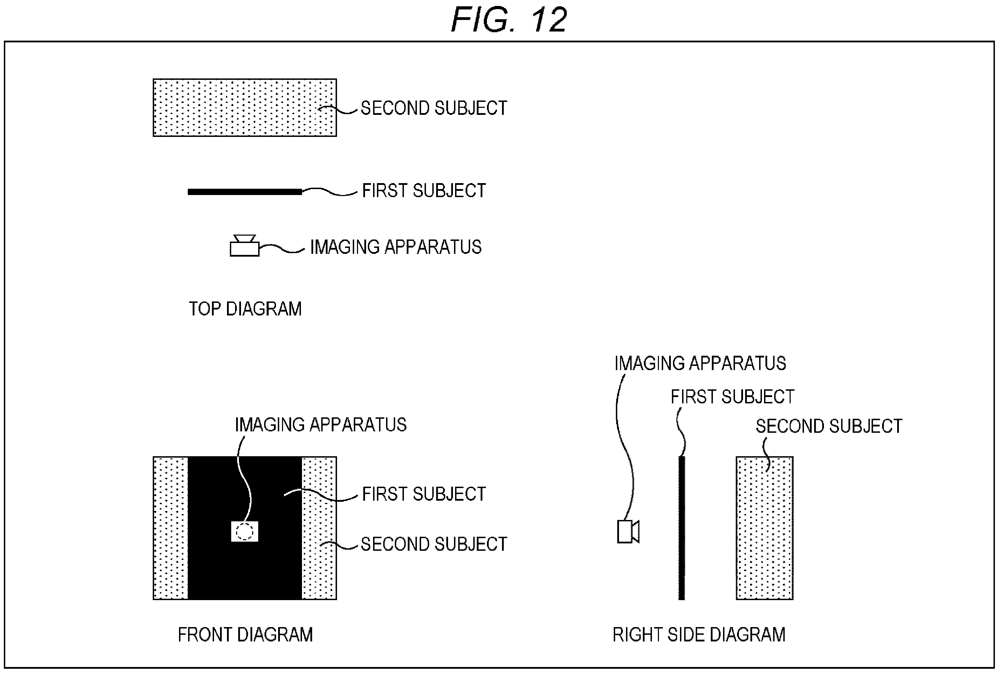

Fig. 12 is a diagram illustrating an example of an imaging situation in a case where subjects exist on a plurality of object planes.

In Fig. 12, similarly to Fig. 1, the imaging situation is illustrated by third angle projection.

In the imaging situation of Fig. 8, it is assumed that the object plane of the subject is single, but in actual imaging, subjects often exist on a plurality of object planes. Fig. 12 illustrates an imaging situation in a case where subjects exist on a plurality of object planes as described above.

In the imaging situation of Fig. 12, when viewed from the imaging apparatus side, behind a first subject corresponding to the subject of Fig. 8, a second subject, which is another subject, exists.

For the first subject, for example, the position $X_{img\_W}$ of the subject on the imaging plane in the short-distance imaging, which is actual imaging, can be transformed into, for example, the position $X_{img\_T}$ of the subject on the imaging plane in the long-distance imaging, which is virtual imaging, by using Formula (6) (Formula (8)).

Similar transformation can be performed for the second subject.

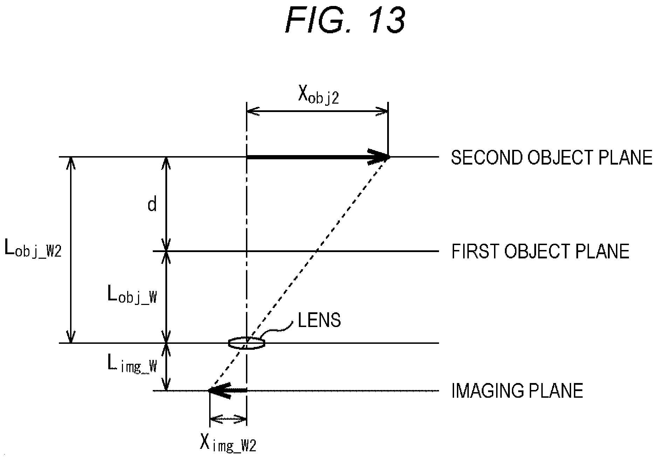

Fig. 13 is a top diagram illustrating a state of wide-angle imaging of imaging a subject from an imaging position close to the subject using a wide-angle lens in the imaging situation of Fig. 12.

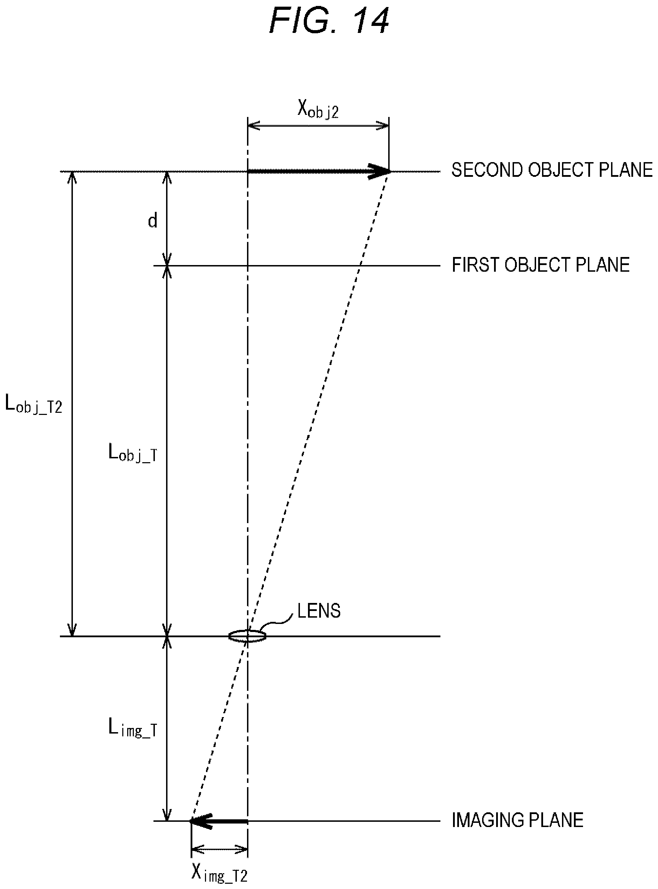

Fig. 14 is a top diagram illustrating a state of telephoto imaging of imaging a subject from an imaging position far from the subject using a telephoto lens in the imaging situation of Fig. 12.

Figs. 13 and 14 are diagrams in which an object plane and an imaging plane are added regarding the second subject as compared with Figs. 9 and 10.

In Figs. 13 and 14, a first object plane is the object plane of the first subject, and a second object plane is the object plane of the second subject. Since the second subject is imaged simultaneously with the first subject as the background of the first subject, imaging planes of the first subject and the second subject are the same in each of Figs. 13 and 14.

In the wide-angle imaging of Fig. 13, the second subject whose position on the second object plane is $X_{obj2}$ is imaged from an imaging position separated by an object distance $L_{obj\_W2}$. The image distance at the time of wide-angle imaging is $L_{img\_W}$, and the position of the second subject on the imaging plane is $X_{img\_W2}$. Since the first subject and the second subject are simultaneously imaged, the image distance at the time of wide-angle imaging is $L_{img\_W}$, which is the same as in the case of Fig. 9. Note that when a distance between the first object plane and the second object plane is d, d is expressed by equation d = $L_{obj\_W2}$ - $L_{obj\_W}$.

In the telephoto imaging of Fig. 14, the second subject whose position on the second object plane is $X_{obj2}$ is imaged from an imaging position separated by an object distance $L_{obj\_T2}$. The image distance at the time of telephoto imaging is $L_{img\_T}$, and the position of the second subject on the imaging plane is $X_{img\_T2}$. Since the first subject and the second subject are simultaneously imaged, the image distance at the time of telephoto imaging is $L_{img\_T}$, which is the same as in the case of Fig. 10. Note that when a distance between the first object plane and the second object plane is d, d is expressed by equation d = $L_{obj\_T2}$ - $L_{obj\_T}$.

When Formula (3) of the perspective projection inverse transformation is applied to the wide-angle imaging of Fig. 13, Formula (9) of the perspective projection inverse transformation can be obtained.

$$X_{obj2} = L_{obj\_W2}/L_{img\_W} \times X_{img\_W2}$$

$$\ldots \quad (9)$$

When Formula (2) of the perspective projection transformation is applied to the telephoto imaging of Fig. 14, Formula (10) of the perspective projection transformation can be obtained.

$$X_{img\_T2} = L_{img\_T}/L_{obj\_T2} \times X_{obj2}$$

$$\ldots \quad (10)$$

Formula (11) can be obtained by substituting $X_{obj2}$ on the left side of Formula (9) into $X_{obj2}$ on the right side of Formula (10).

$$X_{img\_T2} = (L_{img\_T}/L_{obj\_T2}) \times (L_{obj\_W2}/L_{img\_W}) \times X_{img\_W2}$$

$$\ldots \quad (11)$$

Here, a coefficient $k_2$ is defined by Formula (12).

$$k_2 = (L_{img\_T}/L_{obj\_T2}) \times (L_{obj\_W2}/L_{img\_W})$$

$$\ldots \quad (12)$$

Using Formula (12), Formula (11) can be a simple proportional expression of Formula (13).

$$X_{img\_T2} = k_2 \times X_{img\_W2}$$

$$\ldots \quad (13)$$

By using Formula (13) (Formula (11)), it is possible to obtain the position $X_{img\_T2}$ on the imaging plane in telephoto imaging using a telephoto lens, here, long-distance imaging from a long distance from the position $X_{img\_W2}$ on the imaging plane in wide-angle imaging using a wide-angle lens, here, short-distance imaging from a short distance.

Therefore, by applying Formula (8) to a pixel in which the first subject on the first object plane appears and applying Formula (13) to a pixel in which the second subject on the second object plane appears among pixels of a captured image obtained by, for example, short-distance imaging, which is actual imaging, it is possible to map pixels of a captured image obtained by short-distance imaging to pixels of a virtual image obtained, for example, by long-distance imaging, which is virtual imaging.

<Occlusion>

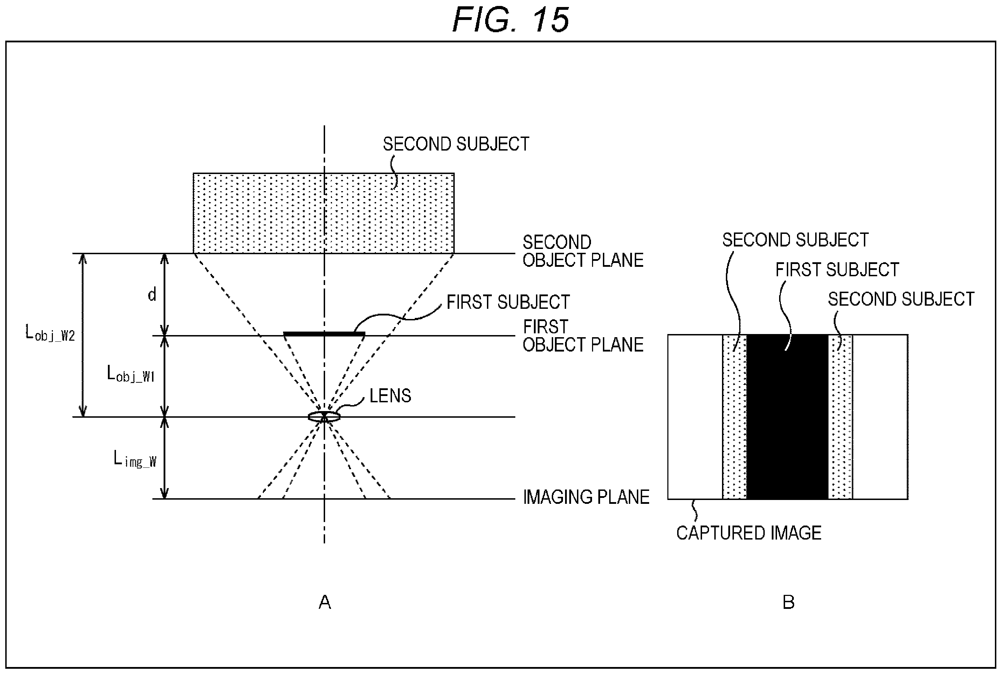

Fig. 15 is a diagram illustrating a state of short-distance imaging and a captured image obtained by the short-distance imaging in the imaging situation of Fig. 12.

That is, A of Fig. 15 is a top diagram illustrating a state of short-distance imaging of imaging a subject from an imaging position close to the subject using a wide-angle lens in the imaging situation of Fig. 12. B of Fig. 15 is a plan diagram illustrating a captured image obtained by the short-distance imaging of A of Fig. 15, and is equivalent to a front diagram in which the imaging plane is viewed from the front.

A of Fig. 15 is a diagram in which the dotted lines as auxiliary lines passing the lens center from the end points of the first subject and the second subject are added to Fig. 13.

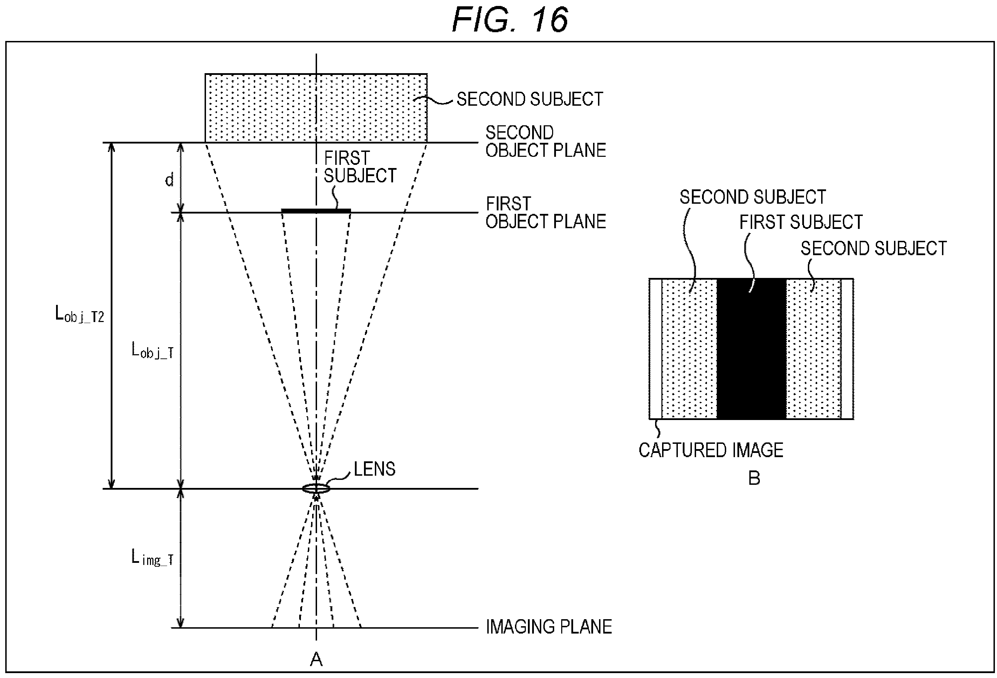

Fig. 16 is a diagram illustrating a state of long-distance imaging and a captured image obtained by the long-distance imaging in the imaging situation of Fig. 12.

That is, A of Fig. 16 is a top diagram illustrating a state of long-distance imaging of imaging a subject from an imaging position far from the subject using a telephoto lens in the imaging situation of Fig. 12. B of Fig. 16 is a plan diagram illustrating a captured image obtained by the long-distance imaging of A of Fig. 16, and is equivalent to a front diagram in which the imaging plane is viewed from the front similarly to the case of Fig. 15.

A of Fig. 16 is a diagram in which the dotted lines as auxiliary lines passing the lens center from the end points of the first subject and the second subject are added to Fig. 14.

Now, in order to simplify the description, it is assumed that the imaging is performed such that the sizes of the first subjects on the imaging plane (captured image) are the same in the short-distance imaging and the long-distance imaging.

The size of the second subject on the imaging plane (captured image) is larger in the long-distance imaging of Fig. 16 than in the short-distance imaging of Fig. 15. As described above, the phenomenon that the size of the second subject on the imaging plane becomes larger in the long-distance imaging than in the short-distance imaging is caused by perspective, similarly to the case described with reference to Figs. 2 and 3.

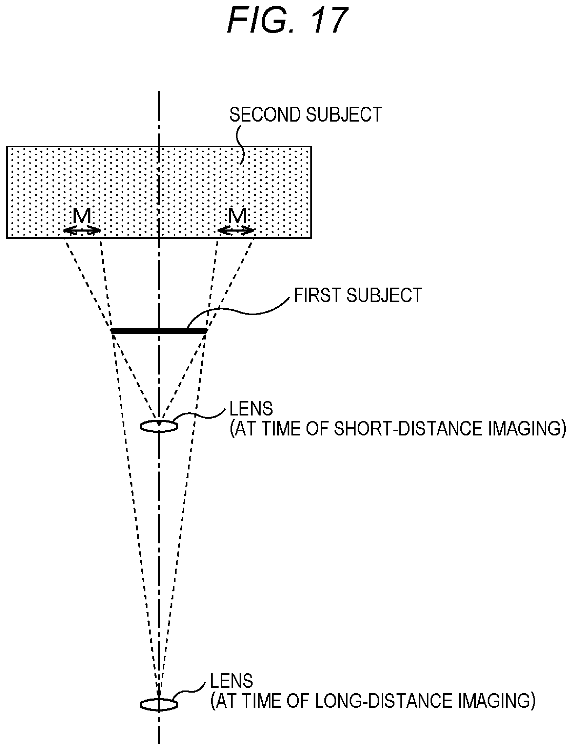

Fig. 17 is a top diagram illustrating a state of imaging in which the top diagram of A of Fig. 15 and the top diagram of A of Fig. 16 are superimposed with a part omitted.

In Fig. 17, portions M of the second subject are imaged in the long-distance imaging, but are not imaged behind the first subject in the short-distance imaging.

In a case where subjects exist on a plurality of object planes, occlusion, that is, a state in which a first subject, which is a subject on the front side, hides a second subject, which is a subject on the back side, and makes the second subject invisible may occur.

The portions M of the second subject are visible in the long-distance imaging, but become occlusion hidden behind the first subject and invisible in the short-distance imaging. It is also referred to as an occlusion portion (missing portion) of the portion M of the second subject that is occlusion as described above.

In the short-distance imaging, which is actual imaging, the portions M of the second subject as the occlusion portions are not imaged. Therefore, in a case where a virtual image obtained by long-distance imaging, which is virtual imaging, is generated using Formulae (8) and (13) on the basis of a captured image obtained by short-distance imaging, in the virtual image, a pixel value cannot be obtained for the portions M of the second subject as the occlusion portions, and thus is missing.

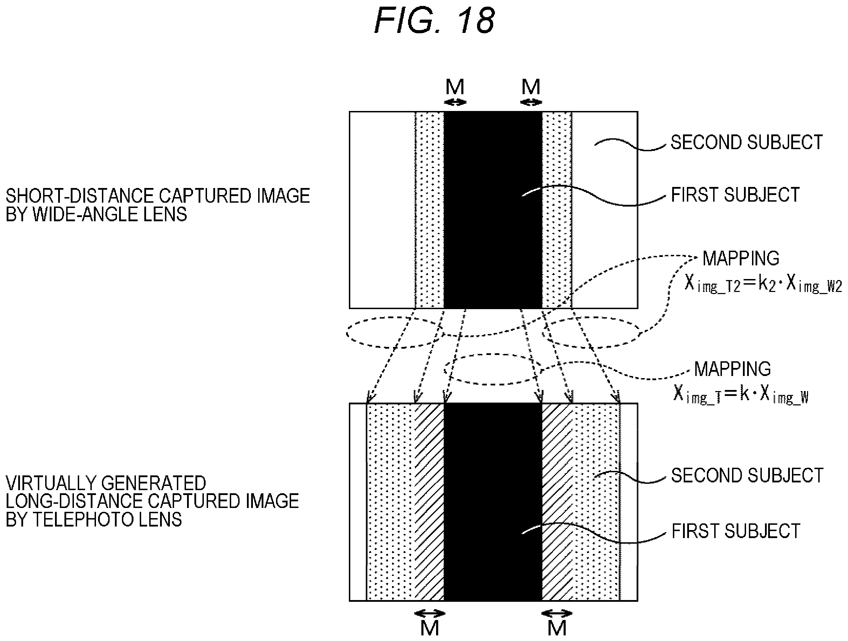

Fig. 18 is a diagram describing mapping of pixel values in a case of generating a virtual image obtained by long-distance imaging, which is virtual imaging, on the basis of a captured image obtained by short-distance imaging, which is actual imaging.

In a captured image (short-distance captured image) obtained by short-distance imaging, which is actual imaging, on the upper side of Fig. 18, the portions M of the second subject are behind the first subject and are occlusion portions.

In a case where a virtual image obtained by long-distance imaging, which is virtual imaging, on the lower side of Fig. 18 is generated on the basis of the captured image on the upper side of Fig. 18, pixel values of pixels at the position $X_{img\_W}$ of the first subject and the position $X_{img\_W2}$ of the second subject in the captured image (short-distance captured image) are mapped as pixel values of pixels at the position $X_{img\_T}$ of the first subject and the position $X_{img\_T2}$ of the second subject in the virtual image (long-distance captured image) using Formulae (8) and (13), respectively.

In the virtual image on the lower side of Fig. 18, the pixel values of the pixels in which the portions M of the second subject appear should be mapped to the hatched portions. However, in the captured image on the upper side of Fig. 18, the portions M of the second subject are not imaged, and the pixel values of the portions M of the second subject cannot be obtained. Therefore, in the virtual image on the lower side of Fig. 18, the pixel values of the pixels of the portions M of the second subject cannot be mapped to the hatched portions, and the pixel values are missing.

As described above, in a case where the subjects exist on a plurality of object planes, missing of pixel values occurs for an occlusion portion that is occlusion, such as the portions M of the second subject.

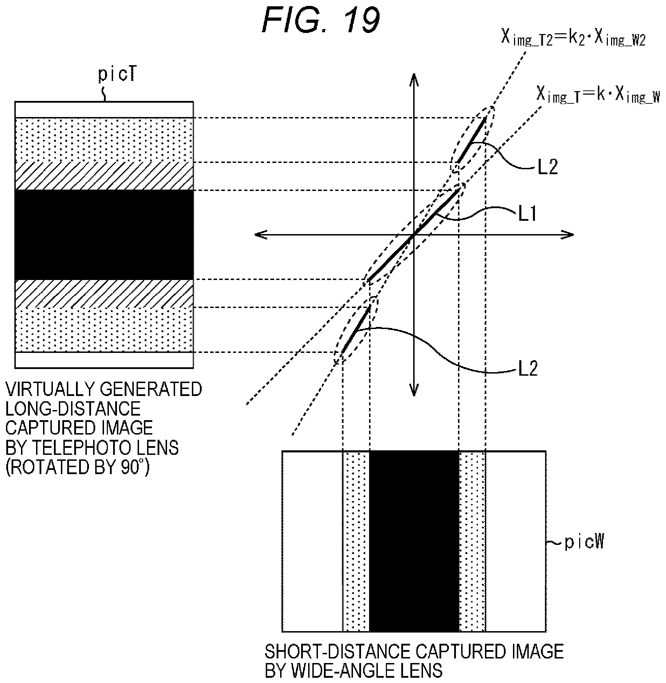

Fig. 19 is another diagram describing mapping of pixel values in a case of generating a virtual image obtained by long-distance imaging, which is virtual imaging, on the basis of a captured image obtained by short-distance imaging, which is actual imaging.

In Fig. 19, an image picW is a captured image obtained by short-distance imaging, which is actual imaging, and an image picT is a virtual image obtained by long-distance imaging, which is virtual imaging.

Furthermore, in Fig. 19, the horizontal axis of two-dimensional coordinates represents the horizontal positions $X_{img\_W}$ and $X_{img\_W2}$ of the captured image picW, and the vertical axis represents the horizontal positions $X_{img\_T}$ and $X_{img\_T2}$ of the virtual image picT.

Moreover, in Fig. 19, a straight line L1 represents Formula (8), and a straight line L2 represents Formula (13).

(The pixel value of) the pixel at the position $X_{img\_W}$ of the first subject in the captured image picW is mapped to (the pixel value of) the pixel at the position $X_{img\_T}$ of the first subject in the virtual image picT obtained by Formula (8) with the position $X_{img\_W}$ as an input.

The pixel at the position $X_{img\_W2}$ of the second subject in the captured image picW is mapped to the pixel at the position $X_{img\_T2}$ of the second subject in the virtual image picT obtained by Formula (13) with the position $X_{img\_W2}$ as an input.

In the virtual image picT, the hatched portions are occlusion portions in which the corresponding portions do not appear in the captured image picW, and pixels (pixel values) are missing.

<Complementation of occlusion portion>

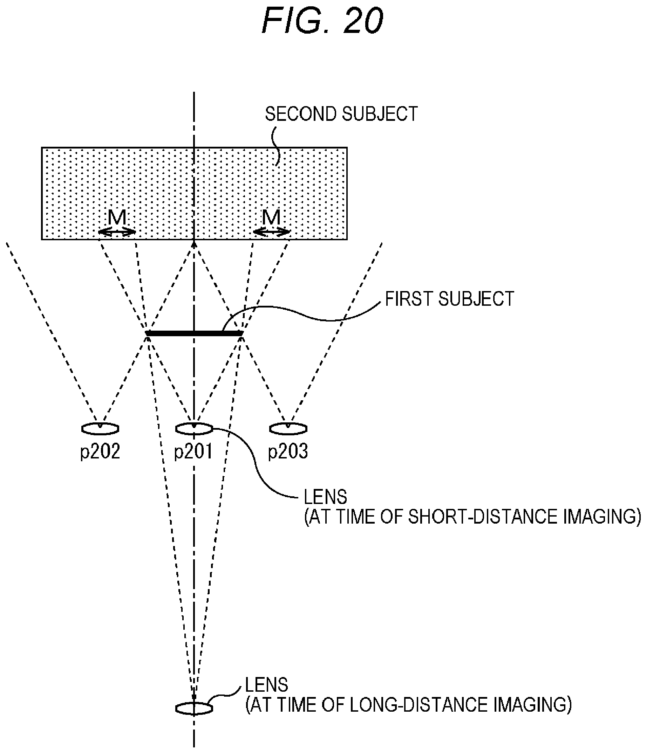

Fig. 20 is a diagram describing an example of an occlusion portion complementing method that complements a pixel of an occlusion portion.

As a method of complementing the occlusion portion, various methods can be adopted.

As a method of complementing the occlusion portion, for example, there is a method of interpolating (a pixel value of) a pixel of the occlusion portion using a pixel in the vicinity of the occlusion portion. As a method of interpolating a pixel, for example, any method such as a nearest neighbor method, a bilinear method, a bicubic method, or the like can be adopted.

In the nearest neighbor method, a pixel value of a neighboring pixel is used as a pixel value of a pixel of an occlusion portion as it is. In the bilinear method, an average value of pixel values of peripheral pixels around a pixel of an occlusion portion is used as a pixel value of a pixel of the occlusion portion. In the bicubic method, an interpolation value obtained by performing three-dimensional interpolation using pixel values of peripheral pixels around a pixel of an occlusion portion is used as a pixel value of a pixel of the occlusion portion.

For example, in a case where the occlusion portion is an image of a monotonous wall surface, by complementing the occlusion portion by interpolation using a pixel in the vicinity of the occlusion portion, it is possible to generate a virtual image (substantially) similar to an image obtained in a case where imaging is performed from a virtual imaging position where the virtual image is imaged. In a case where a virtual image similar to an image obtained in a case where imaging is performed from a virtual imaging position is generated, the virtual image is also referred to as a virtual image with high reproducibility.

Note that, in addition, as a method of interpolating a pixel of the occlusion portion using a pixel in the vicinity of the occlusion portion, for example, in a case where the occlusion portion is an image having a texture such as a rough wall surface or the like, a method of interpolating the occlusion portion with a duplicate of a region having a certain area of the periphery of the occlusion portion can be adopted.

The method of interpolating a pixel of an occlusion portion using a pixel in the vicinity of the occlusion portion is based on the premise that the estimation that the occlusion portion will be an image similar to the vicinity of the occlusion portion is correct.

Therefore, in a case where the occlusion portion is not an image similar to the vicinity of the occlusion portion (in a case where the occlusion portion is singular as compared with the vicinity of the occlusion portion), there is a possibility that a virtual image with high reproducibility cannot be obtained by the method of interpolating a pixel of the occlusion portion using a pixel in the vicinity of the occlusion portion.

For example, in a case where a graffiti portion of a wall partially having graffiti is an occlusion portion, by a method of interpolating a pixel of the occlusion portion using a pixel in the vicinity of the occlusion portion, the graffiti cannot be reproduced, and a virtual image with high reproducibility cannot be obtained.

In a case where the occlusion portion is not an image similar to the vicinity of the occlusion portion, in order to obtain a virtual image with high reproducibility, in addition to main imaging (original imaging), as actual imaging, auxiliary imaging can be performed from an imaging position different from the imaging position of the main imaging such that the occlusion portion generated in the main imaging appears. Then, the occlusion portion generated in the main imaging can be complemented by using the captured image obtained by the auxiliary imaging.

Fig. 20 is a top diagram describing main imaging and auxiliary imaging performed as actual imaging of the first subject and the second subject.

In Fig. 20, actual imaging with a position p201 as an imaging position is performed as main imaging, and each actual imaging with positions p202 and p203 displaced to the right and left from the position p201 as imaging positions is performed as auxiliary imaging.

In this case, the main imaging from the imaging position p201 cannot image the portions M of the second subject that are occlusion portions. However, in the auxiliary imaging from the imaging positions p202 and p203, the portions M of the second subject that are occlusion portions in the main imaging can be imaged.

Therefore, a virtual image obtained by virtual imaging is generated on the basis of the captured image obtained by main imaging from the imaging position p201, and, in the virtual image, (the pixel value of) the portions M of the second subject that are occlusion portions are complemented using the captured image obtained by auxiliary imaging from the imaging positions p202 and p203, so that a virtual image with high reproducibility can be obtained.

The main imaging and the auxiliary imaging can be performed simultaneously or at different timings using a plurality of imaging apparatuses.

Furthermore, the main imaging and the auxiliary imaging can be performed using a single imaging apparatus such as a multi-camera having a plurality of imaging systems.

Moreover, the main imaging and the auxiliary imaging can be performed at different timings using a single imaging apparatus having a single imaging system. For example, for a subject that does not move, the auxiliary imaging can be performed before or after the main imaging.

Complementation of the occlusion portion can be performed using only a part of information such as color, texture, or the like of a captured image obtained by auxiliary imaging. Moreover, the occlusion portion can be complemented by being used in combination with another method.

As described above, the occlusion portion can be complemented using a captured image obtained by auxiliary imaging, or using a captured image obtained by another main imaging, for example, a captured image obtained by main imaging performed in the past.

For example, in a case where the second subject as the background of the first subject is famous architecture (construction) such as Tokyo Tower or the like, for such famous architecture, captured images captured from various imaging positions in the past may be accumulated in an image library such as a stock photo service or the like.

In a case where famous (or well-known) architecture appears in a captured image by actual imaging (a captured image obtained by actual imaging), and a portion where the famous architecture appears is an occlusion portion, complementation of the occlusion portion can be performed using a captured image in which the same famous architecture appears, which has been captured in the past and accumulated in an image library. In addition, the occlusion portion can be complemented using an image published on a network such as the Internet or the like, for example, a photograph published on a website that provides a map search service.

The complementation of the occlusion portion can be performed using an image or can be performed using data (information) other than the image.

For example, in a case where the second subject serving as the background of the first subject is architecture, when information such as the shape of the architecture, a surface finishing method, a coating color, and the like is disclosed and available on a web server or the like as building data regarding the building of the architecture, the occlusion portion can be complemented by estimating a pixel value of the occlusion portion using such building data.

In a case where a portion where the architecture appears is an occlusion portion, when complementation of the occlusion portion is performed using a captured image captured in the past and accumulated in an image library or using building data, it is necessary to specify the architecture, that is, here, the second subject. The second subject can be specified by, for example, performing image recognition targeted at a captured image in which the second subject appears or specifying a position where actual imaging to capture the captured image has been performed. The position where the actual imaging has been performed can be specified by referring to metadata of the captured image such as exchangeable image file format (EXIF) information or the like.

Note that actual imaging is performed, for example, in a situation where the subject is illuminated by a light source such as sunlight.

On the other hand, in a case where the occlusion portion is complemented using a past captured image (captured image captured in the past) or building data, (illumination by) a light source at the time of actual imaging is not reflected in the occlusion portion.

Therefore, for example, in a case where complementation of the occlusion portion of the captured image by actual imaging performed under sunlight is performed using a past captured image or building data, the color of (the portion that was) the occlusion portion may become an unnatural color as compared with the color of another portion.

Therefore, in a case where the occlusion portion of the captured image by actual imaging performed under sunlight is complemented using a past captured image or building data, when weather data regarding weather can be obtained, the occlusion portion can be complemented using the past captured image or building data, and then the color tone of the occlusion portion can be corrected using the weather data.

In actual imaging performed under sunlight, the intensity and color temperature of light illuminating the subject are affected by the weather. In a case where weather data can be obtained, weather at the time of actual imaging can be specified from the weather data, and illumination light information such as intensity or color temperature of light illuminating the subject at the time of actual imaging performed under sunlight can be estimated from the weather.

Then, the occlusion portion can be complemented using a past captured image or building data, and the color tone of the occlusion portion can be corrected such that the color of the occlusion portion becomes the color when the subject is illuminated with the light indicated by the illumination light information.

By correcting the color tone as described above, the color of the occlusion portion can be set to a natural color as compared with the color of another portion, and therefore, a virtual image with high reproducibility can be obtained.

In addition, the complementation of the occlusion portion can be performed using, for example, a learning model subjected to machine learning.

For example, in a case where both the short-distance imaging and the long-distance imaging can be actually performed, it is possible to perform learning of a learning model so as to output the image of the occlusion portion of the virtual image obtained by the long-distance imaging performed as the virtual imaging by using, as an input, for example, the captured image obtained by the short-distance imaging performed as actual imaging using the captured image obtained by actually performing the short-distance imaging and the long-distance imaging as learning data.

In this case, by inputting a captured image obtained by short-distance imaging, which is actual imaging, to the learning model after learning, an image of an occlusion portion of a virtual image obtained by the long-distance imaging, which is virtual imaging, is obtained, and the occlusion portion can be complemented by the image.

A complementation method of complementing the occlusion portion is not particularly limited. However, by adopting a complementation method that can be performed by a single imaging apparatus or even a plurality of, but a small number of, imaging apparatuses, it is possible to suppress a reduction in mobility at the imaging site and easily obtain an image (virtual image) captured from a desired position (virtual imaging position). In particular, by adopting a complementation method that can be performed by a single imaging apparatus, the mobility at the imaging site can be maximized.

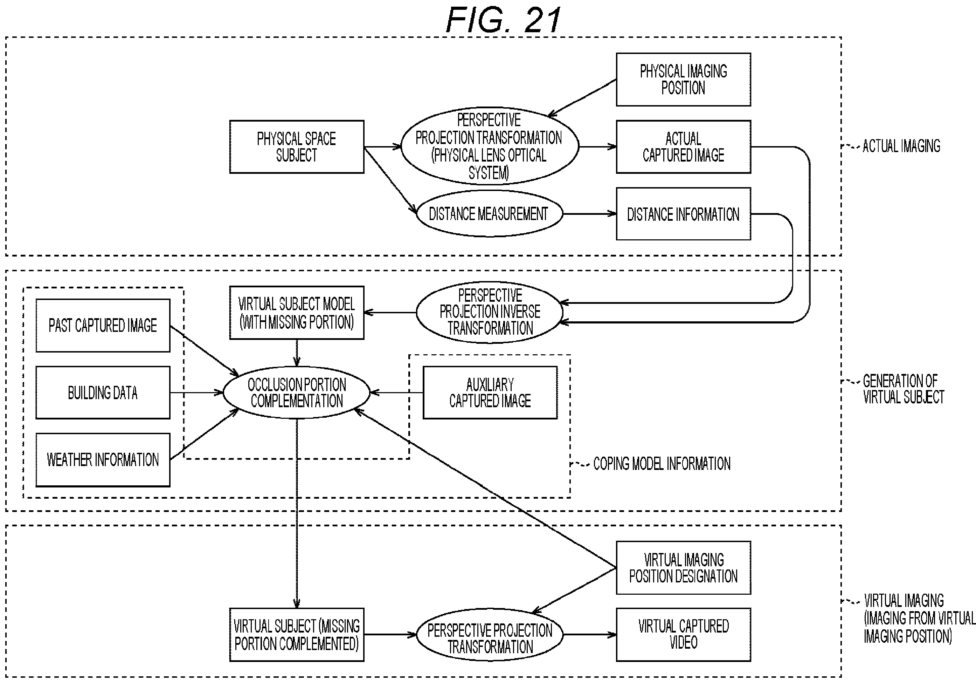

Fig. 21 is a diagram describing another example of a process of obtaining a virtual image obtained by virtual imaging on the basis of information obtained by actual imaging.

In Fig. 21, similarly to the case of Fig. 11, a process of obtaining a virtual image obtained by virtual imaging on the basis of information obtained by actual imaging includes actual imaging, generation of a virtual subject (model), and virtual imaging. However, in Fig. 21, complementation of the occlusion portion is added to the case of Fig. 11.

In the actual imaging, similarly to the case of Fig. 11, a captured image (actual captured image) that is a two-dimensional image is generated (captured).

In the generation of the virtual subject, the virtual subject as a corrected model is reproduced (generated) from the captured image obtained by the actual imaging using the distance information from the imaging position of the actual imaging to the subject and the coping model information.

The coping model information is knowledge information for coping with occlusion, and includes, for example, one or more of a captured image captured in the past (past captured image), a captured image obtained by auxiliary imaging (auxiliary captured image), building data, weather data, and the like.

In the generation of the virtual subject, first, similarly to the case of Fig. 11, the perspective projection inverse transformation of the captured image obtained by the actual imaging is performed using the distance information so as to generate the virtual subject.

Moreover, in the generation of the virtual subject, the virtual imaging position is given as a parameter, and an imaged portion of the virtual subject imaged from the virtual imaging position is specified in the virtual imaging to be performed later.

Then, by complementing, using the coping model information, a missing part in which (a pixel value of) a pixel of the captured image is missing in the imaged portion of the virtual subject, in other words, an occlusion portion that is occlusion when the virtual subject is viewed from the virtual imaging position, the virtual subject after the complementation is generated as a corrected model obtained by correcting the virtual subject.

In the virtual imaging, similarly to the case of Fig. 11, a virtual image is generated by perspective projection transformation.

However, the virtual imaging of Fig. 21 is different from the case of Fig. 11 in that the target of the perspective projection transformation is not the virtual subject itself generated by performing the perspective projection inverse transformation of the captured image obtained by the actual imaging, but the virtual subject, which is the corrected model in which the occlusion portion of the virtual subject has been complemented.

In the virtual imaging of Fig. 21, the corrected model is (virtually) imaged from the virtual imaging position by performing the perspective projection transformation on the corrected model, and a virtual image (virtual captured image) is generated.

With respect to the complementation of the occlusion portion, the range of the complementation can be suppressed to a necessary minimum by performing the complementation only on the occlusion portion that is occlusion when the virtual subject is viewed from the virtual imaging position. Therefore, in a case where the auxiliary imaging is performed in addition to the main imaging, the auxiliary imaging can be performed in the minimum necessary range, and it is possible to suppress a reduction in mobility at the time of imaging.

Note that, in the auxiliary imaging, by imaging a range slightly wider than the necessary minimum, the virtual imaging position can be finely corrected after imaging.

<Another virtual image generation method>

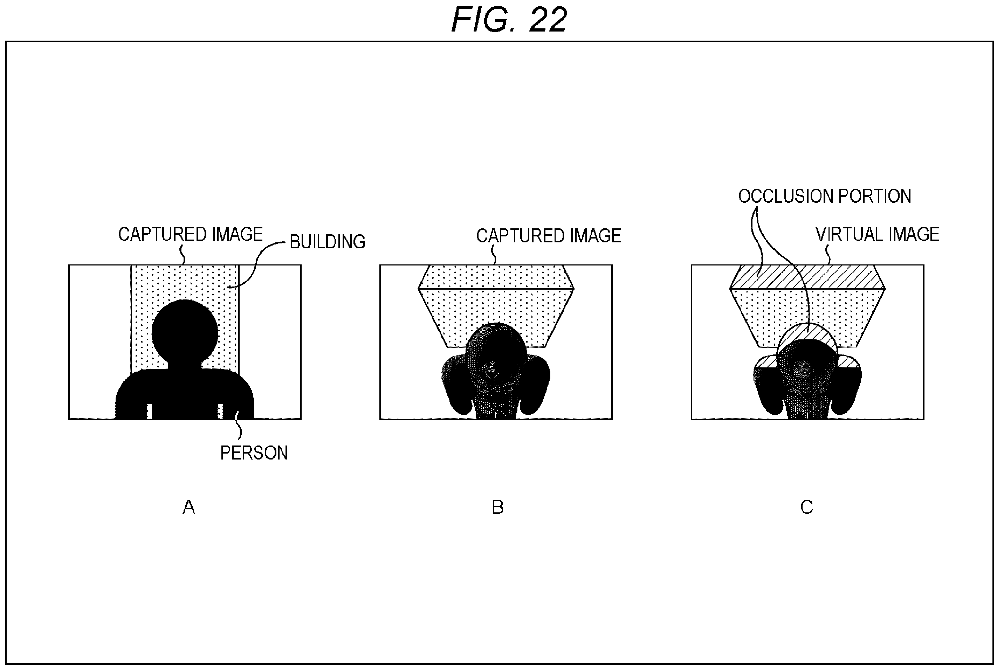

Fig. 22 is a plan diagram illustrating an example of a captured image and a virtual image.

In the above-described case, the generation method of generating a virtual image captured in a case where imaging is performed in one of the short-distance imaging and the long-distance imaging on the basis of a captured image actually captured in the other of the short-distance imaging and the long-distance imaging has been described as an example. That is, the generation method of generating a virtual image captured from a virtual imaging position on the basis of a captured image, the virtual imaging position being a position that is moved along the optical axis of an imaging apparatus at the time of imaging from an imaging position where the captured image is actually captured and different only in imaging distance has been described.

The virtual image generation method described above can also be applied to a case where a position moved in a direction not along the optical axis of the imaging apparatus from the imaging position of the captured image is set as the virtual imaging position. That is, the above-described generation of the virtual image can be applied not only to the case of generating a virtual image obtained by imaging the subject from a position moved along the optical axis of the imaging apparatus from the imaging position of the captured image, but also to the case of generating a virtual image (another virtual image) obtained by imaging the subject from a position moved in a direction not along the optical axis of the imaging apparatus.

In a case where the subject is imaged with the optical axis of the imaging apparatus facing the subject, when a position moved along the optical axis of the imaging apparatus at the time of actual imaging from the imaging position of the captured image is set as a virtual imaging position, the optical axis of the imaging apparatus coincides between the actual imaging and the virtual imaging.

On the other hand, when a position moved in a direction not along the optical axis of the imaging apparatus at the time of actual imaging from the imaging position of the captured image is set as the virtual imaging position, the optical axis of the imaging apparatus is different between the actual imaging and the virtual imaging.

The case where the position moved in the direction not along the optical axis of the imaging apparatus from the imaging position of the captured image is set as the virtual imaging position corresponds to, for example, a case where the actual imaging is performed in the imaging situation of Fig. 1 and the virtual imaging is performed in the imaging situation of Fig. 4.

A of Fig. 22 illustrates a captured image obtained by the actual imaging in the imaging situation of Fig. 1.

B of Fig. 22 illustrates a bird's-eye view image as a captured image obtained by the actual imaging in the imaging situation of Fig. 4.

C of Fig. 22 illustrates a virtual image obtained (generated) by performing the virtual imaging on the virtual subject generated using the distance information on the basis of the captured image of A of Fig. 22 with the imaging position in the imaging situation of Fig. 4 as the virtual imaging position.

In a virtual image obtained by performing the virtual imaging on a virtual subject itself generated using the distance information on the basis of the captured image of A of Fig. 22, the upper portions of a person and a building that do not appear in the captured image in the imaging situation of Fig. 1 become occlusion portions as illustrated by hatching in C of Fig. 22.

By complementing the occlusion portions, a virtual image close to the captured image of B of Fig. 22 can be obtained.

That is, within the imaged portion of the virtual subject, an occlusion portion that is occlusion when the virtual subject is viewed from the virtual imaging position is complemented using the coping model information, and perspective projection transformation of the corrected model that is the virtual subject after the complementation is performed, so that a virtual image close to the captured image of B of Fig. 22 can be obtained.

As a method of complementing the occlusion portion, a method of interpolating the occlusion portion using a pixel in the vicinity of the occlusion portion, a method of using a captured image obtained by auxiliary imaging, a method of using a captured image captured in the past, a method of using a learning model learned by machine learning, a method using building data, and the like described above can be adopted.

<Virtual imaging UI>

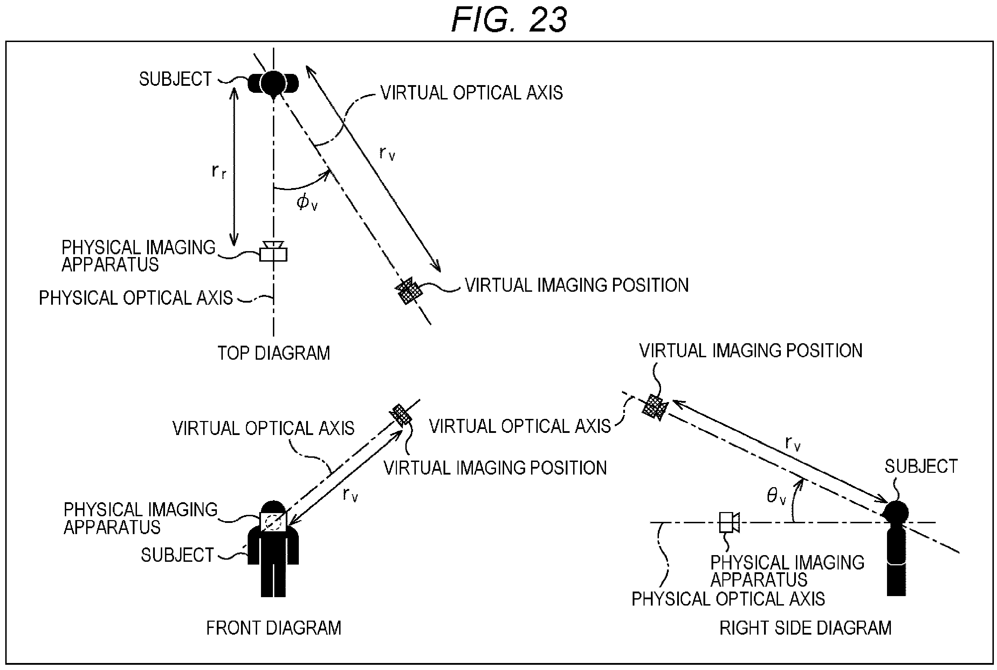

Fig. 23 is a diagram describing a method of expressing a virtual imaging position in a case of performing virtual imaging.

In Fig. 23, the imaging situation is illustrated by third angle projection.

For the imaging apparatus, the imaging position of the actual imaging is determined by physically (actually) installing the imaging apparatus. In the present technology, in addition to the imaging position of the actual imaging, a virtual imaging position is required, and it is necessary to designate the virtual imaging position.

As a designation method of designating the virtual imaging position, for example, a method of automatically designating a position moved by a predetermined distance in a predetermined direction with respect to the imaging position as the virtual imaging position can be adopted. Furthermore, in addition, as a designation method of designating the virtual imaging position, for example, a method of causing a user to perform designation can be adopted.

Hereinafter, a UI in a case where the user designates the virtual imaging position will be described, but before that, a method of expressing the virtual imaging position will be described.

In the present embodiment, as illustrated in Fig. 23, the virtual imaging position is expressed by (the coordinates of) a spherical coordinate system with the position of the subject (intersecting the optical axis of the imaging apparatus) as the center (origin).

Here, the intersection between the optical axis of the imaging apparatus (physically existing physical imaging apparatus), that is, the optical axis of (the optical system of) the imaging apparatus and the subject is referred to as the center of the subject. The optical axis of the imaging apparatus passes through the center of the image sensor of the imaging apparatus and coincides with a straight line perpendicular to the image sensor.

The optical axis connecting the center of the image sensor of the imaging apparatus and the center of the subject (optical axis of the imaging apparatus) is referred to as a physical optical axis, and the optical axis connecting the virtual imaging position and the center of the subject is referred to as a virtual optical axis.

When the center of the subject is set as the center of the spherical coordinate system, in the spherical coordinate system, the virtual imaging position can be expressed by a rotation amount (azimuth angle) $\varphi_V$ in the azimuth angle direction with respect to the physical optical axis of the virtual optical axis, a rotation amount (elevation angle) $\theta_V$ in the elevation angle direction, and a distance $r_V$ between the subject on the virtual optical axis and the virtual imaging position.

Note that, in Fig. 23, a distance $r_r$ represents the distance between the subject on the physical optical axis and the imaging position.

Furthermore, in Fig. 23, a distance $r_V$ illustrated in the top diagram represents the distance along the virtual optical axis, not a distance component on the plane.

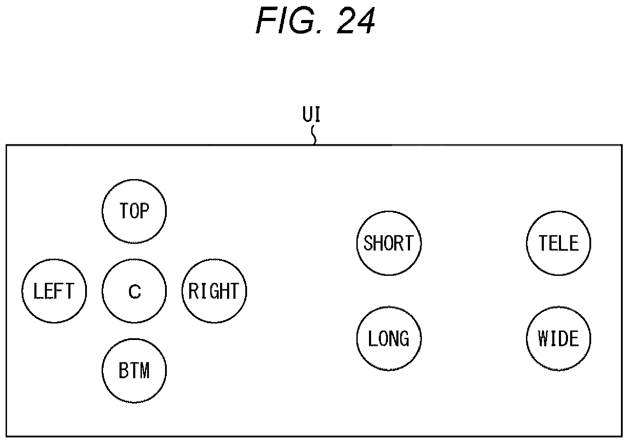

Fig. 24 is a plan diagram illustrating an example of a UI operated in a case where a user designates a virtual imaging position.

In Fig. 24, the UI includes operation buttons such as a C button, a TOP button, a BTM button, a LEFT button, a RIGHT button, a SHORT button, a LONG button, a TELE button, and a WIDE button.

Note that the UI can be configured using an operation unit such as a rotary dial, a joystick, or a touch panel in addition to the operation buttons. Furthermore, in a case where the UI is configured using the operation buttons, the arrangement of the operation buttons is not limited to the arrangement of Fig. 24.

The imaging apparatus to which the present technology is applied can generate in real time a virtual image similar to a captured image obtained by imaging a subject from a virtual imaging position and output in real time the virtual image to a display unit such as a viewfinder. In this case, the display unit can display the virtual image in real time as a so-called through image. By viewing the virtual image displayed as a through image on the display unit, the user of the imaging apparatus can enjoy feeling as if the user is imaging the subject from the virtual imaging position.

In the spherical coordinate system, it is necessary to determine the center of the spherical coordinate system in order to express the virtual imaging position.

In the imaging apparatus, for example, when the C button of the UI is operated, the position of the point at which the optical axis of the imaging apparatus and the subject intersect is determined as the center of the spherical coordinate system. Then, the virtual imaging position is set to the imaging position of the actual imaging, that is, the azimuth angle $\varphi_V$ = 0, the elevation angle $\theta_V$ = 0, and the distance $r_V$ = $r_r$.

The azimuth angle $\varphi_V$ can be designated by operating the LEFT button or the RIGHT button. In the imaging apparatus, when the LEFT button is pressed, the azimuth angle $\varphi_V$ changes in the negative direction by a predetermined constant amount. Furthermore, when the RIGHT button is pressed, the azimuth angle $\varphi_V$ changes in the positive direction by a predetermined constant amount.

The elevation angle $\theta_V$ can be designated by operating the TOP button or the BTM button. When the TOP button is pressed, the elevation angle $\theta_V$ changes in the positive direction by a predetermined constant amount. Furthermore, when the BTM button is pressed, the elevation angle $\theta_V$ changes in the negative direction by a predetermined constant amount.

The distance $r_V$ can be designated by operating the SHORT button or the LONG button. When the SHORT button is pressed, the distance $r_V$ changes in the negative direction by a predetermined constant amount or by a constant magnification. Furthermore, when the LONG button is pressed, the distance $r_V$ changes in the positive direction by a predetermined constant amount or by a constant magnification.

In Fig. 24, as described above, in addition to the C button, the TOP button, the BTM button, the LEFT button, the RIGHT button, the SHORT button, and the LONG button related to the designation of the virtual imaging position, the UI is provided with the TELE button and the WIDE button for designating the focal distance (hereinafter, also referred to as a virtual focal distance) of the virtual imaging apparatus when the virtual imaging from the virtual imaging position is performed.

When the TELE button is pressed, the virtual focal distance changes in a direction in which the virtual focal distance increases by a predetermined constant amount or by a constant magnification. Furthermore, when the WIDE button is pressed, the virtual focal distance changes in a direction in which the virtual focal distance decreases by a predetermined constant amount or by a constant magnification.

For example, the image distances $L_{img\_w}$ and $L_{img\_T}$ in Formulae (4) and (5) are determined according to the virtual focal distance.

Note that the manner of changing the azimuth angle $\varphi_V$ or the like with respect to the operation of the operation buttons of the UI is not limited to those described above. For example, in a case where the operation button is pressed for a long time, convenience can be enhanced by continuously changing the virtual imaging position and the virtual focal distance such as the azimuth angle $\varphi_V$ while the operation button is pressed for a long time, or changing the change amount of the virtual imaging position and the virtual focal distance such as the azimuth angle $\varphi_V$ according to the time when the operation button is pressed for a long time.

Furthermore, the method of designating the virtual imaging position is not limited to the method of operating the UI. For example, a method of detecting the line of sight of the user, detecting a gaze point at which the user is gazing from the result of detection of the line of sight, and designating a virtual imaging position, or the like can be adopted. In this case, the position of the gaze point is designated (set) as the virtual imaging position.

Moreover, in a case where a virtual image obtained by virtual imaging from a virtual imaging position designated by the operation of the UI or the like is displayed in real time, the imaging apparatus can display the occlusion portion so that the user can recognize the occlusion portion.

Here, in the virtual image generated by complementing the occlusion portion, there is a possibility that accuracy of information of the complemented portion where the occlusion portion is complemented is inferior to an image obtained by actual imaging from the virtual imaging position.

Therefore, after the virtual imaging position is designated, the imaging apparatus can display the virtual image on the display unit so that the user can recognize the occlusion portion that is occlusion in the virtual image obtained by virtual imaging from the virtual imaging position.

In this case, the user of the imaging apparatus can recognize which portion of the subject is an occlusion portion by viewing the virtual image displayed on the display unit. Then, by recognizing which portion of the subject is an occlusion portion, the user of the imaging apparatus can consider the imaging position of the actual imaging so that an important portion of the subject for the user does not become an occlusion portion. That is, the imaging position can be considered such that an important portion of the subject for the user appears in the captured image obtained by the actual imaging.

Moreover, by recognizing which portion of the subject is an occlusion portion, the user of the imaging apparatus can perform the auxiliary imaging such that the portion of the subject that is an occlusion portion appears in a case where the main imaging and the auxiliary imaging described in Fig. 20 are performed.

As a display method of displaying the virtual image on the display unit so that the user can recognize the occlusion portion that is occlusion in the virtual image, for example, a method of displaying the occlusion portion in the virtual image in a specific color, a method of reversing the gradation of the occlusion portion at a predetermined cycle such as one second, or the like can be adopted.

<Embodiment of the imaging apparatus to which the present technology has been applied>

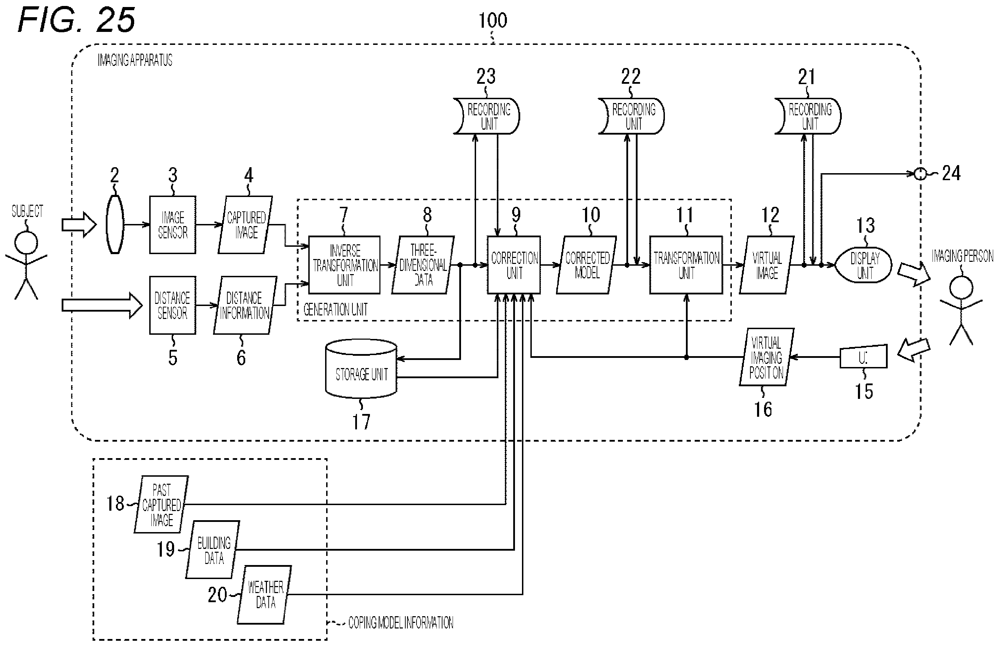

Fig. 25 is a block diagram illustrating a configuration example of an embodiment of an imaging apparatus such as a digital camera or the like to which the present technology has been applied.

In Fig. 25, an imaging apparatus 100 includes an imaging optical system 2, an image sensor 3, a distance sensor 5, an inverse transformation unit 7, a correction unit 9, a transformation unit 11, a display unit 13, a UI 15, a storage unit 17, recording units 21 to 23, and an output unit 24. The imaging apparatus 100 can be applied to imaging of both a moving image and a still image.

The imaging optical system 2 condenses light from a subject on the image sensor 3 to form an image. Therefore, the subject in the three-dimensional space is subjected to the perspective projection transformation on the image sensor 3.

The image sensor 3 receives light from the imaging optical system 2 and performs photoelectric conversion to generate a captured image 4 that is a two-dimensional image having a pixel value corresponding to the amount of received light, and supplies the captured image 4 to the inverse transformation unit 7.

The distance sensor 5 measures distance information 6 to each point of the subject and outputs the distance information 6. The distance information 6 output from the distance sensor 5 is supplied to the inverse transformation unit 7.

Note that the distance information 6 of the subject can be measured by an external apparatus and supplied to the inverse transformation unit 7. In this case, the imaging apparatus 100 can be configured without providing the distance sensor 5.

The inverse transformation unit 7 performs the perspective projection inverse transformation of the captured image 4 from the image sensor 3 using the distance information 6 from the distance sensor 5, and generates and outputs a virtual subject, which is three-dimensional data 8.

The correction unit 9 complements the occlusion portion of the virtual subject, which is the three-dimensional data 8, output by the inverse transformation unit 7, and outputs the complemented virtual subject as a corrected model 10.

The transformation unit 11 performs the perspective projection transformation of the corrected model 10 output by the correction unit 9, and outputs a resultant virtual image 12, which is a two-dimensional image.

The display unit 13 displays the virtual image 12 output by the transformation unit 11. In a case where the transformation unit 11 outputs the virtual image 12 in real time, the display unit 13 can display the virtual image 12 in real time.

The UI 15 is configured as illustrated, for example, in Fig. 24, and is operated by, for example, a user who is an imaging person of the imaging apparatus 100. The user can perform an operation on the UI 15 for designating a virtual imaging position 16 while viewing the virtual image displayed on the display unit 13.

The UI 15 sets and outputs the virtual imaging position 16 according to the operation of the user.

The correction unit 9 complements an occlusion portion that becomes occlusion when the virtual subject is viewed from the virtual imaging position 16 output by the UI 15.

That is, the correction unit 9 specifies an occlusion portion that becomes occlusion when the virtual subject is viewed from the virtual imaging position 16. Thereafter, in the correction unit 9, the occlusion portion is complemented, and the complemented virtual subject is output as the corrected model 10.

In the transformation unit 11, the virtual image 12, which is a two-dimensional image, obtained by imaging the corrected model 10 output by the correction unit 9 from the virtual imaging position 16 output by the UI 15, is generated by the perspective projection transformation of the corrected model 10.

Therefore, on the display unit 13, the virtual image 12 obtained by imaging the corrected model 10 from the virtual imaging position 16 set according to the operation of the UI 15 by the user is displayed in real time. Therefore, the user can designate the virtual imaging position 16 at which the desired virtual image 12 can be obtained by operating the UI 15 while viewing the virtual image 12 displayed on the display unit 13.

Note that, in the correction unit 9, the complementation of the occlusion portion can be performed by interpolating the occlusion portion using a pixel in the vicinity of the occlusion portion. Furthermore, for example, a past captured image 18, building data 19, weather data 20, and the like as the coping model information are obtained from the outside, and the complementation of the occlusion portion can be performed using the coping model information.

Moreover, the occlusion portion can be complemented using a captured image obtained by auxiliary imaging, a machine-learned learning model, or the like as another coping model information.

In a case where the auxiliary imaging is performed, when the auxiliary imaging is performed prior to the main imaging, a virtual subject, which is the three-dimensional data 8, generated from the captured image 4 obtained by the auxiliary imaging in the inverse transformation unit 7 is stored in the storage unit 17.

That is, the storage unit 17 stores the virtual subject, which is the three-dimensional data 8, generated from the captured image 4 obtained by the auxiliary imaging in the inverse transformation unit 7.

The virtual subject, which is the three-dimensional data 8, generated from the captured image 4 obtained by the auxiliary imaging stored in the storage unit 17 can be used in the correction unit 9 to complement an occlusion portion that is occlusion when the virtual subject, which is the three-dimensional data 8, generated from the captured image 4 obtained by the main imaging performed after the auxiliary imaging is viewed from the virtual imaging position 16.

In a case where the auxiliary imaging is performed, when the auxiliary imaging is performed after the main imaging, a virtual subject, which is the three-dimensional data 8, generated from the captured image 4 obtained by the main imaging in the inverse transformation unit 7 is stored in the recording unit 23.

That is, the recording unit 23 stores the virtual subject, which is the three-dimensional data 8, generated from the captured image 4 obtained by the main imaging in the inverse transformation unit 7.

The complementation of the occlusion portion for the virtual subject, which is the three-dimensional data 8, that is generated from the captured image 4 obtained by the main imaging and recorded in the recording unit 23, can be performed by the correction unit 9 using the virtual subject, which is the three-dimensional data 8, generated from the captured image 4 obtained by the auxiliary imaging performed after the main imaging.

Thus, in a case where the auxiliary imaging is performed, when the auxiliary imaging is performed after the main imaging, after waiting for the auxiliary imaging to be performed after the main imaging, the occlusion portion for the virtual subject, which is the three-dimensional data 8, generated from the captured image obtained by the main imaging is complemented.

In a case where such complementation of the occlusion portion is performed, it is difficult to generate the virtual image 12 from the captured image 4 obtained by the main imaging in real time. Therefore, in a case where generation of a virtual image in real time is required, the auxiliary imaging needs to be performed prior to the main imaging, not after the main imaging.

In Fig. 25, the recording unit 21 records the virtual image 12 output by the transformation unit 11. The virtual image 12 recorded in the recording unit 21 can be output to the display unit 13 and the output unit 24.

The recording unit 22 records the corrected model 10 output by the correction unit 9.

For example, the correction unit 9 can complement a wide range portion (a portion including a portion of a virtual subject that becomes a new occlusion portion when the virtual imaging position 16 is slightly changed and the virtual subject is viewed from the virtual imaging position 16 after the change) that is slightly wider than the occlusion portion including the occlusion portion that is occlusion when the virtual subject is viewed from the virtual imaging position 16 from the UI 15. In the recording unit 22, it is possible to record the corrected model 10 in which such a wide range portion is complemented.

In this case, the virtual image 12 in which the virtual imaging position 16 is finely corrected (finely adjusted) can be generated using the corrected model 10, which is recorded in the recording unit 22 and in which the wide range portion has been complemented, as a target of the perspective projection transformation of the transformation unit 11. Therefore, it is possible to generate the virtual image 12 in which the virtual imaging position 16 is finely corrected by using the corrected model 10, which is recorded in the recording unit 22 and in which the wide range portion has been complemented, after the captured image 4 that is the basis of the corrected model 10 in which the wide range portion has been complemented is captured.

The recording unit 23 records the virtual subject, which is the three-dimensional data 8, output by the inverse transformation unit 7, that is, the virtual subject before the occlusion portion is complemented by the correction unit 9. For example, in a case where the virtual image 12 is used for news or the like and the authenticity of a part of the virtual image 12 is questioned, the virtual subject recorded in the recording unit 23 can be referred to as unprocessed, that is, true data for confirming the authenticity.

Note that the recording unit 23 can record the captured image 4 that is the basis of generation of the virtual subject, which is the three-dimensional data 8, together with the virtual subject, which is the three-dimensional data 8, or instead of the virtual subject, which is the three-dimensional data 8.

The output unit 24 is an interface (I/F) that outputs data to the outside of the imaging apparatus 100, and outputs the virtual image 12 output by the transformation unit 11 to the outside in real time.

In a case where an external apparatus, which is not illustrated, is connected to the output unit 24, when the transformation unit 11 outputs the virtual image 12 in real time, the virtual image 12 can be distributed in real time from the output unit 24 to the external apparatus.

For example, in a case where an external display unit, which is not illustrated, is connected to the output unit 24, when the transformation unit 11 outputs the virtual image 12 in real time, the virtual image 12 is output in real time from the output unit 24 to the external display unit, and the virtual image 12 is displayed in real time on the external display unit.

In the imaging apparatus 100 configured as described above, the inverse transformation unit 7 performs the perspective projection inverse transformation of the captured image 4 from the image sensor 3 using the distance information 6 from the distance sensor 5 to generate the virtual subject, which is the three-dimensional data 8.

The correction unit 9 uses the coping model information such as the past captured image 18 or the like to complement an occlusion portion that is occlusion when the virtual subject, which is the three-dimensional data 8, generated by the inverse transformation unit 7 is viewed from the virtual imaging position 16 from the UI 15, and obtains a virtual subject after the complementation, which is the corrected model 10, obtained by correcting the virtual subject.

Using the corrected model 10 obtained by the correction unit 9, the transformation unit 11 generates the virtual image 12 obtained by imaging the corrected model 10 from the virtual imaging position 16 by the perspective projection transformation.

Thus, it can be said that the inverse transformation unit 7, the correction unit 9, and the transformation unit 11 configure the generation unit that generates the virtual image 12 obtained by imaging the subject from the virtual imaging position 16 different from the imaging position from the captured image 4 obtained by imaging the subject from the imaging position by using the distance information 6 from the imaging position to the subject and the coping model information.

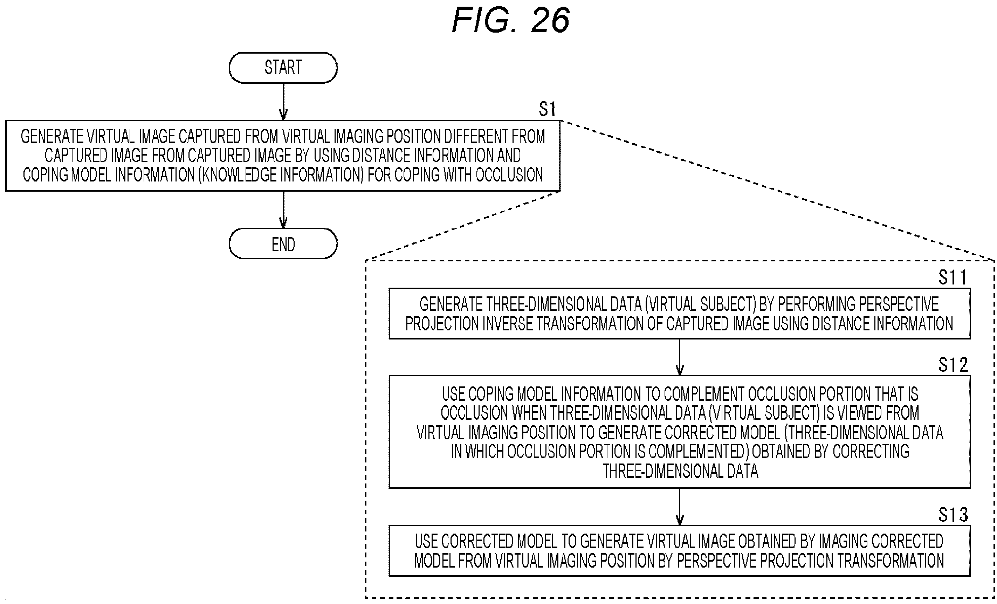

Fig. 26 is a flowchart describing an example of processing of a generation unit.

In step S1, the generation unit generates the virtual image 12, which is different from the captured image 4 and captured from the virtual imaging position 16, from the captured image 4 by using the distance information 6 and the coping model information (knowledge information) for coping with occlusion such as the past captured image 18 or the like.

Specifically, in step S11, the inverse transformation unit 7 of the generation unit generates the virtual subject, which is the three-dimensional data 8, by performing the perspective projection inverse transformation of the captured image 4 using the distance information 6, and the processing proceeds to step S12.

In step S12, the correction unit 9 uses the coping model information such as the past captured image 18 or the like to complement an occlusion portion that is occlusion when the virtual subject, which is the three-dimensional data 8, generated by the inverse transformation unit 7 is viewed from the virtual imaging position 16 to generate the corrected model 10 (three-dimensional data 8 in which the occlusion portion is complemented) obtained by correcting the virtual subject, which is the three-dimensional data 8, and the processing proceeds to step S13.

In step S13, using the corrected model 10 generated by the correction unit 9, the transformation unit 11 generates the virtual image obtained by imaging the corrected model 10 from the virtual imaging position 16 by the perspective projection transformation.

With the imaging apparatus 100, for example, even in the case of a situation where it is difficult to image a subject from a desired imaging position (viewpoint), by using a captured image captured from a certain imaging position (viewpoint) at which imaging can be performed, distance information from the imaging position to the subject, and coping model information that is auxiliary information other than separately obtained distance information, it is possible to generate a virtual image captured in a pseudo manner from a virtual imaging position, which is a desired imaging position, different from an actual imaging position. Therefore, an image (virtual image) captured from a desired position can be easily obtained.

With the imaging apparatus 100, for example, as illustrated in Fig. 6, in an imaging situation where a wall exists in front of a person, it is possible to generate a virtual image as if imaging is performed from a position behind the wall surface in front of the person.

Furthermore, with the imaging apparatus 100, for example, in an imaging situation in which the user of the imaging apparatus 100 cannot approach the subject, such as an imaging situation in which the user captures an image of the outside through a window in a room or on a vehicle, it is possible to generate a virtual image as if the user has approached the subject and captured the image.

Moreover, with the imaging apparatus 100, for example, a virtual image such as the bird's-eye view image illustrated in Fig. 5 can be generated without using a stepladder, a drone, or the like.

Furthermore, with the imaging apparatus 100, for example, in a case where the subject is a person and the eye line of the person is not directed to the imaging apparatus, it is possible to generate a so-called virtual image with the camera being looked at by setting the position ahead of the eye line as the virtual imaging position.

Moreover, with the imaging apparatus 100, by setting the virtual imaging position to the position of the eyeball of the head of the user who is an imaging person, it is possible to generate a virtual image showing a state viewed from the viewpoint of the user. By displaying such a virtual image on a glasses-type display, it is possible to configure electronic glasses having no parallax.

<Description of a computer to which the present technology has been applied>

Next, a series of processing of the inverse transformation unit 7, the correction unit 9, and the transformation unit 11 constituting the generation unit described above can be performed by hardware or software. In a case where the series of processing is performed by software, a program constituting the software is installed in a general-purpose computer or the like.

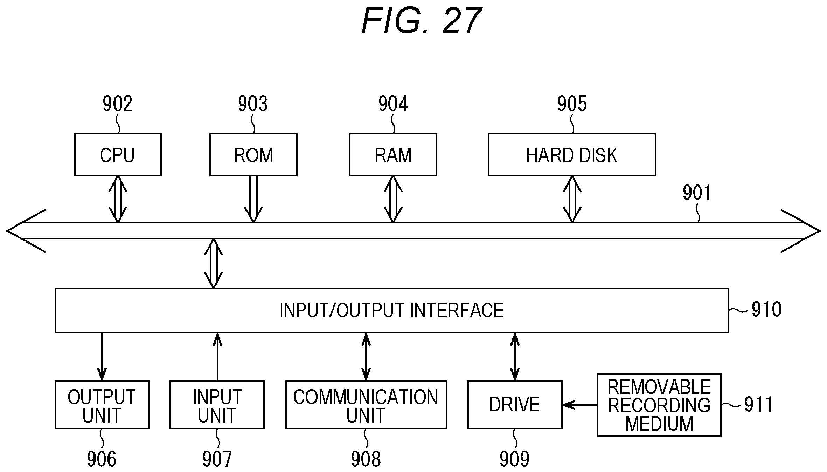

Fig. 27 is a block diagram illustrating a configuration example of an embodiment of a computer in which a program that executes the series of processing described above is installed.

The program may be preliminarily recorded on a hard disk 905 or ROM 903, which is a recording medium incorporated in a computer.

Alternatively, the program can be stored (recorded) in a removable recording medium 911 driven by a drive 909. Such a removable recording medium 911 can be provided as so-called package software. Here, examples of the removable recording medium 911 include a flexible disc, a compact disc read only memory (CD-ROM), a magneto optical (MO) disc, a digital versatile disc (DVD), a magnetic disc, a semiconductor memory, or the like.

Note that the program may not only be installed in a computer from the removable recording medium 911 described above, but also be downloaded into a computer and installed in the incorporated hard disk 905 via a communication network or a broadcast network. In other words, for example, the program can be wirelessly transferred to a computer from a download site via an artificial satellite for digital satellite broadcast, or can be transferred to a computer by wire via a network, e.g., a local area network (LAN) or the Internet.

The computer incorporates a central processing unit (CPU) 902. An input/output interface 910 is connected to the CPU 902 via a bus 901.

When a command is input by an operation or the like of an input unit 907 by the user via the input/output interface 910, the CPU 902 executes the program stored in the read only memory (ROM) 903 accordingly. Alternatively, the CPU 902 loads the program stored in the hard disk 905 into random access memory (RAM) 904 and executes the program.

Therefore, the CPU 902 performs the processing following the aforementioned flowchart or the processing performed by the configuration of the aforementioned block diagram. Then, the CPU 902 causes the processing result to be, output from an output unit 906, transmitted from a communication unit 908, recorded by the hard disk 905, or the like, for example, via the input/output interface 910, as needed.

Note that the input unit 907 includes a keyboard, a mouse, a microphone, or the like. Furthermore, the output unit 906 includes a liquid crystal display (LCD), a speaker, or the like.

Here, in the present specification, the processing performed by the computer according to the program is not necessarily needed to be performed in chronological order along the procedure described as the flowchart. In other words, the processing performed by the computer according to the program also includes processing that is executed in parallel or individually (e.g., parallel processing or processing by an object).

Furthermore, the program may be processed by a single computer (processor) or may be processed in a distributed manner by a plurality of computers. Moreover, the program may be transferred to and executed by a remote computer.

Moreover, in the present specification, a system means a cluster of a plurality of constituent elements (apparatuses, modules (parts), etc.) and it does not matter whether or not all the constituent elements are in the same casing. Therefore, a plurality of apparatuses that is housed in different enclosures and connected via a network, and a single apparatus in which a plurality of modules is housed in a single enclosure are both the system.

Note that the embodiment of the present technology is not limited to the aforementioned embodiments, but various changes may be made within the scope of the appended claims.

For example, the present technology can adopt a configuration of cloud computing in which one function is shared and jointly processed by a plurality of apparatuses via a network.

Furthermore, each step described in the above-described flowcharts can be executed by a single apparatus or shared and executed by a plurality of apparatuses.

Moreover, in a case where a single step includes a plurality of pieces of processing, the plurality of pieces of processing included in the single step can be executed by a single device or can be shared and executed by a plurality of devices.

Furthermore, the effects described in the present specification are merely illustrative and are not limitative, and other effects may be provided.

REFERENCE SIGNS LIST

| | |
|---|---|
| 2 | Imaging optical system |
| 3 | Image sensor |
| 5 | Distance sensor |
| 7 | Inverse transformation unit |
| 9 | Correction unit |
| 11 | Transformation unit |
| 13 | Display unit |
| 15 | UI |
| 17 | Storage unit |
| 21 to 23 | Recording unit |
| 24 | Output unit |
| 901 | Bus |
| 902 | CPU |
| 903 | ROM |
| 904 | RAM |
| 905 | Hard disk |
| 906 | Output unit |
| 907 | Input unit |
| 908 | Communication unit |
| 909 | Drive |
| 910 | Input/output interface |
| 911 | Removable recording medium |

**Claims**

1. An imaging apparatus (100) comprising:

a generation unit (7, 9, 11) that uses distance information from an imaging position to a subject and model information to generate a virtual image obtained by imaging the subject from a virtual imaging position different from the imaging position from a captured image obtained by imaging the subject from the imaging position, wherein the model information includes knowledge information for coping with occlusion by complementing a pixel of an occlusion portion, being occluded in the captured image;
a user interface, UI, that designates the virtual imaging position;
wherein, the UI includes:

a first operation unit that is operated when a center of a spherical coordinate system expressing the virtual imaging position is determined;
a second operation unit that is operated when an azimuth angle of the virtual imaging position in the spherical coordinate system is changed;

a third operation unit that is operated when an elevation angle of the virtual imaging position in the spherical coordinate system is changed; and

a fourth operation unit that is operated when a distance between the center of the spherical coordinate system and the virtual imaging position is changed;

wherein the UI further includes a fifth operation unit that is operated when a focal distance of a virtual imaging apparatus when virtual imaging from the virtual imaging position is performed is changed;

and wherein the UI is configured to change a change amount of the virtual imaging position or the focal distance according to a time during which any one of the first to fifth operation units is being operated;

wherein the virtual image is output to a display unit in real time and wherein the imaging apparatus is configured to display, in the virtual image, the occlusion portion, so that the user can recognize the occlusion portion.

2. The imaging apparatus according to claim 1, wherein
the generation unit generates a corrected model from the captured image using the distance information and the model information, and generates the virtual image using the corrected model.

3. The imaging apparatus according to claim 1, wherein
the generation unit:

generates a virtual subject by performing perspective projection inverse transformation of the captured image using the distance information;

generates a corrected model in which the virtual subject is corrected by complementing an occlusion portion that is occlusion when the virtual subject is viewed from the virtual imaging position using the model information; and

generates the virtual image obtained by imaging the corrected model from the virtual imaging position by perspective projection transformation using the corrected model.

4. The imaging apparatus according to claim 3, further comprising:
a recording unit that records the virtual subject or the corrected model.

5. The imaging apparatus according to claim 1, wherein
the model information includes one or more of the captured image captured in the past, building data related to building, and weather data related to weather.

6. The imaging apparatus according to claim 1, wherein
the UI continuously changes the virtual imaging position or the focal distance while any one of the first to fifth operation units is being operated.

7. The imaging apparatus according to claim 1, wherein
the UI designates a gaze point at which a user is gazing as the virtual imaging position.

8. An imaging method comprising:

using distance information from an imaging position to a subject and model information to generate a virtual image obtained by imaging the subject from a virtual imaging position different from the imaging position from a captured image obtained by imaging the subject from the imaging position, wherein the model information includes knowledge information for coping with occlusion by complementing a pixel of an occlusion portion, being occluded in the captured image;

providing a user interface, UI, that designates the virtual imaging position;

the UI including:

a first operation unit that is operated when a center of a spherical coordinate system expressing the virtual imaging position is determined;

a second operation unit that is operated when an azimuth angle of the virtual imaging position in the spherical coordinate system is changed;

a third operation unit that is operated when an elevation angle of the virtual imaging position in the spherical coordinate system is changed; and

a fourth operation unit that is operated when a distance between the center of the spherical coordinate system and the virtual imaging position is changed; wherein the UI further including a fifth operation unit that is operated when a focal distance of a virtual imaging apparatus when virtual imaging from the virtual imaging position is performed is changed;

and wherein the UI changes a change amount of the virtual imaging position or the focal distance according to a time during which any one of the first to fifth operation units is being operated;

wherein the virtual image is output to a display unit in real time and wherein the method comprises displaying, in the virtual image, the occlusion portion so that the user can recognize the occlusion portion.

9. A program for causing a computer to function as:

a generation unit(7, 9, 11) that uses distance information from an imaging position to a subject and model information to generate a virtual image obtained by imaging the subject from a virtual imaging position different from the imaging position from a captured image obtained by imaging the subject from the imaging position, wherein the model information includes knowledge information for coping with occlusion by complementing a pixel of an occlusion portion, being occluded in the captured image;

a user interface, UI, that designates the virtual imaging position;

wherein the UI includes:

a first operation unit that is operated when a center of a spherical coordinate system expressing the virtual imaging position is determined;

a second operation unit that is operated when an azimuth angle of the virtual imaging position in the spherical coordinate system is changed;

a third operation unit that is operated when an elevation angle of the virtual imaging position in the spherical coordinate system is changed; and

a fourth operation unit that is operated when a distance between the center of the spherical coordinate system and the virtual imaging position is changed; wherein the UI further includes a fifth operation unit that is operated when a focal distance of a virtual imaging apparatus when virtual imaging from the virtual imaging position is performed is changed;

and the UI is configured to change a change amount of the virtual imaging position or the focal distance according to a time during which any one of the first to fifth operation units is being operated;

wherein the virtual image is output to a display unit in real time and the occlusion portion is displayed, in the virtual image, so that the user can recognize the occlusion portion.

**Patentansprüche**

1. Bildgebungseinrichtung (100), umfassend:

eine Erzeugungseinheit (7, 9, 11), die Entfernungsinformationen von einer Bildgebungsposition zu einem Objekt und Modellinformationen verwendet, um ein virtuelles Bild zu erzeugen, das durch Bildgebung des Objekts von einer Position einer virtuellen Bildgebung, die sich von der Bildgebungsposition unterscheidet, aus einem aufgenommenen Bild erhalten wird, das durch Bildgebung des Objekts von der Bildgebungsposition erhalten wird, wobei die Modellinformationen Wissensinformationen zum Umgehen mit Verdeckung durch Ergänzen eines Pixels eines Verdeckungsabschnitts einschließen, der in dem aufgenommenen Bild verdeckt ist;

eine Benutzerschnittstelle, UI, die die Position der virtuellen Bildgebung bezeichnet;

wobei die UI einschließt:

eine erste Betriebseinheit, die betrieben wird, wenn ein Zentrum eines sphärischen Koordinatensystems, das die Position der virtuellen Bildgebung ausdrückt, bestimmt wird;

eine zweite Betriebseinheit, die betrieben wird, wenn ein Azimutwinkel der Position der virtuellen Bildgebung in dem sphärischen Koordinatensystem geändert wird;

eine dritte Betriebseinheit, die betrieben wird, wenn ein Elevationswinkel der Position der virtuellen Bildgebung in dem sphärischen Koordinatensystem geändert wird; und

eine vierte Betriebseinheit, die betrieben wird, wenn eine Entfernung zwischen dem Zentrum des sphärischen Koordinatensystems und der Position der virtuellen Bildgebung geändert wird;

wobei die UI ferner eine fünfte Betriebseinheit einschließt, die betrieben wird, wenn eine Brennweite einer Einrichtung für virtuelle Bildgebung geändert wird, wenn die virtuelle Bildgebung von der Position der virtuellen Bildgebung durchgeführt wird;

und wobei die UI konfiguriert ist, um eine Änderungsmenge der Position der virtuellen Bildgebung oder der Brennweite gemäß einer Zeit zu ändern, während der eine beliebige der ersten bis fünften Betriebseinheiten betrieben wird;

wobei das virtuelle Bild in Echtzeit an eine Anzeigeeinheit ausgegeben wird und wobei die Bildgebungseinrichtung konfiguriert ist, um in dem virtuellen Bild den Verdeckungsabschnitt anzuzeigen, so dass der Benutzer den Verdeckungsabschnitt erkennen kann.

2. Bildgebungseinrichtung nach Anspruch 1, wobei die Erzeugungseinheit ein korrigiertes Modell aus dem aufgenommenen Bild unter Verwendung der Entfernungsinformationen und der Modellinformationen erzeugt und das virtuelle Bild unter Verwendung des korrigierten Modells erzeugt.

3. Bildgebungseinrichtung nach Anspruch 1, wobei die Erzeugungseinheit:

ein virtuelles Objekt durch Durchführen einer inversen Perspektivenprojektionstransformation des aufgenommenen Bildes unter Verwendung der Entfernungsinformationen erzeugt;

ein korrigiertes Modell erzeugt, in dem das virtuelle Objekt durch Ergänzen eines Verdeckungsabschnitts korrigiert wird, der die Verdeckung ist, wenn das virtuelle Objekt von der Position der virtuellen Bildgebung unter Verwendung der Modellinformationen betrachtet wird; und

das virtuelle Bild erzeugt, das durch Bildgebung des korrigierten Modells von der Position der virtuellen Bildgebung durch die Perspektivenprojektionstransformation unter Verwendung des korrigierten Modells erhalten wird.

4. Bildgebungseinrichtung nach Anspruch 3, ferner umfassend: eine Aufzeichnungseinheit, die das virtuelle Objekt oder das korrigierte Modell aufzeichnet.

5. Bildgebungseinrichtung nach Anspruch 1, wobei die Modellinformationen eines oder mehrere des aufgenommenen Bildes, das in der Vergangenheit aufgenommen wurde, von Gebäudedaten bezüglich eines Gebäudes und von Wetterdaten bezüglich des Wetters einschließen.

6. Bildgebungseinrichtung nach Anspruch 1, wobei die UI die Position der virtuellen Bildgebung oder die Brennweite kontinuierlich ändert, während eine beliebige der ersten bis fünften Betriebseinheiten betrieben wird.

7. Bildgebungseinrichtung nach Anspruch 1, wobei die UI einen Blickpunkt, auf den ein Benutzer blickt, als die Position der virtuellen Bildgebung bezeichnet.

8. Bildgebungsverfahren, umfassend:

Verwenden von Entfernungsinformationen von einer Bildgebungsposition zu einem Objekt und Modellinformationen, um ein virtuelles Bild zu erzeugen, das durch Bildgebung des Objekts von einer Position der virtuellen Bildgebung, die sich von der Bildgebungsposition unterscheidet, aus einem aufgenommenen Bild erhalten wird, das durch Bildgebung des Objekts von der Bildgebungsposition erhalten wird, wobei die Modellinformationen Wissensinformationen zum Umgehen mit Verdeckung durch Ergänzen eines Pixels eines Verdeckungsabschnitts einschließen, der in dem aufgenommenen Bild verdeckt ist;

Bereitstellen einer Benutzerschnittstelle, UI, die die Position der virtuellen Bildgebung bezeichnet; die UI einschließlich:

einer ersten Betriebseinheit, die betrieben wird, wenn ein Zentrum eines sphärischen Koordinatensystems, das die Position der virtuellen Bildgebung ausdrückt, bestimmt wird;

einer zweiten Betriebseinheit, die betrieben wird, wenn ein Azimutwinkel der virtuellen Bildgebungsposition in dem sphärischen Koordinatensystem geändert wird;

einer dritten Betriebseinheit, die betrieben wird, wenn ein Elevationswinkel der Position der virtuellen Bildgebung in dem sphärischen Koordinatensystem geändert wird; und

einer vierten Betriebseinheit, die betrieben wird, wenn eine Entfernung zwischen dem Zentrum des sphärischen Koordinatensystems und der Position der virtuellen Bildgebung geändert wird; wobei die UI ferner eine fünfte Betriebseinheit einschließt, die betrieben wird, wenn eine Brennweite einer Einrichtung für virtuelle Bildgebung geändert wird, wenn die virtuelle Bildgebung von der Position der virtuellen Bildgebung durchgeführt wird;

und wobei die UI eine Änderungsmenge der Position der virtuellen Bildgebung oder der Brennweite gemäß einer Zeit ändert, während der eine beliebige der ersten bis fünften Betriebseinheiten betrieben wird; wobei das virtuelle Bild in Echtzeit an eine Anzeigeeinheit ausgegeben wird und wobei das Verfahren das Anzeigen des Verdeckungsabschnitts in dem virtuellen Bild umfasst, so dass der Benutzer den Verdeckungsabschnitt erkennen kann.

9. Programm zum Verursachen, dass ein Computer arbeitet als:

eine Erzeugungseinheit (7, 9, 11), die Entfernungsinformationen von einer Bildgebungsposition zu einem Objekt und Modellinformationen verwendet, um ein virtuelles Bild zu erzeugen, das durch Bildgebung des Objekts von einer Position der virtuellen Bildgebung, die sich von der Bildgebungsposition unterscheidet, aus einem aufgenommenen Bild erhalten wird, das durch Bildgebung des Objekts von der Bildgebungsposition erhalten wird, wobei die Modellinformationen Wissensinformationen zum Umgehen mit Verdeckung durch Ergänzen eines Pixels eines Verdeckungsabschnitts einschließen, der in dem aufgenommenen Bild verdeckt ist;

eine Benutzerschnittstelle, UI, die die Position der virtuellen Bildgebung bezeichnet;

wobei die UI einschließt:

eine erste Betriebseinheit, die betrieben wird, wenn ein Zentrum eines sphärischen Koordinatensystems, das die Position der virtuellen Bildgebung ausdrückt, bestimmt wird;

eine zweite Betriebseinheit, die betrieben wird, wenn ein Azimutwinkel der virtuellen Bildgebungsposition in dem sphärischen Koordinatensystem geändert wird;

eine dritte Betriebseinheit, die betrieben wird, wenn ein Elevationswinkel der Position der virtuellen Bildgebung in dem sphärischen Koordinatensystem geändert wird; und

eine vierte Betriebseinheit, die betrieben wird, wenn eine Entfernung zwischen dem Zentrum des sphärischen Koordinatensystems und der Position der virtuellen Bildgebung geändert wird; wobei die UI ferner eine fünfte Betriebseinheit einschließt, die betrieben wird, wenn eine Brennweite einer Einrichtung für virtuelle Bildgebung geändert wird, wenn die virtuelle Bildgebung von der Position der virtuellen Bildgebung durchgeführt wird;

und die UI konfiguriert ist, um eine Änderungsmenge der Position der virtuellen Bildgebung oder der Brennweite gemäß einer Zeitdauer zu ändern, während der eine beliebige der ersten bis fünften Betriebseinheiten betrieben wird;

wobei das virtuelle Bild in Echtzeit an eine Anzeigeeinheit ausgegeben wird und der Verdeckungsabschnitt in dem virtuellen Bild angezeigt wird, so dass der Benutzer den Verdeckungsabschnitt erkennen kann.

## Revendications

1. Appareil d'imagerie (100) comprenant :

une unité de génération (7, 9, 11) qui utilise des informations de distance entre une position d'imagerie et un sujet et des informations de modèle pour générer une image virtuelle obtenue en imageant le sujet à partir d'une position d'imagerie virtuelle différente de la position d'imagerie à partir d'une image capturée obtenue en imageant le sujet à partir de la position d'imagerie, dans lequel les informations de modèle comportent des informations de connaissance pour faire face à l'occlusion en complétant un pixel d'une partie d'occlusion, étant occulté dans l'image capturée ;

une interface utilisateur, IU, qui désigne la position d'imagerie virtuelle ;

dans lequel l'IU comporte :

une première unité d'opération qui fonctionne lorsqu'un centre d'un système de coordonnées sphériques exprimant la position d'imagerie virtuelle est déterminé ;

une deuxième unité d'opération qui fonctionne lorsqu'un angle d'azimut de la position d'imagerie virtuelle dans le système de coordonnées sphériques est modifié ;

une troisième unité d'opération qui fonctionne lorsqu'un angle d'élévation de la position d'imagerie virtuelle dans le système de coordonnées sphériques est modifié ; et

une quatrième unité d'opération qui fonctionne lorsqu'une distance entre le centre du système de coordonnées sphériques et la position d'imagerie virtuelle est modifiée ;

dans lequel l'IU comporte en outre une cinquième unité d'opération qui fonctionne lorsqu'une distance focale d'un appareil d'imagerie virtuelle lors de la réalisation d'une imagerie virtuelle à partir de la position d'imagerie virtuelle est modifiée ;
et dans lequel l'interface utilisateur est configurée pour modifier une quantité de changement de la position d'imagerie virtuelle ou de la distance focale en fonction d'un temps pendant lequel l'une quelconque des première à cinquième unités d'opération fonctionne ;
dans lequel l'image virtuelle est transmise à une unité d'affichage en temps réel et dans lequel l'appareil d'imagerie est configuré pour afficher, dans l'image virtuelle, la partie d'occlusion, de sorte que l'utilisateur peut reconnaître la partie d'occlusion.

**2.** Appareil d'imagerie selon la revendication 1, dans lequel
l'unité de génération génère un modèle corrigé à partir de l'image capturée à l'aide des informations de distance et des informations de modèle, et génère l'image virtuelle à l'aide du modèle corrigé.

**3.** Appareil d'imagerie selon la revendication 1, dans lequel
l'unité de génération :

génère un sujet virtuel en effectuant une transformation inverse de projection en perspective de l'image capturée à l'aide des informations de distance ;
génère un modèle corrigé dans lequel le sujet virtuel est corrigé en complétant une partie d'occlusion qui est une occlusion lorsque le sujet virtuel est visualisé à partir de la position d'imagerie virtuelle à l'aide des informations de modèle ; et
génère l'image virtuelle obtenue en imaginant le modèle corrigé à partir de la position d'imagerie virtuelle par transformation par projection en perspective à l'aide du modèle corrigé.

**4.** Appareil d'imagerie selon la revendication 3, comprenant en outre :
une unité d'enregistrement qui enregistre le sujet virtuel ou le modèle corrigé.

**5.** Appareil d'imagerie selon la revendication 1, dans lequel
les informations de modèle comportent une ou plusieurs parmi l'image capturée capturée dans le passé, des données de bâtiment relatives au bâtiment et des données météorologiques liées aux conditions météorologiques.

**6.** Appareil d'imagerie selon la revendication 1, dans lequel
l'interface utilisateur change continuellement la position d'imagerie virtuelle ou la distance focale pendant que l'une quelconque des première à cinquième unités d'opération est en opération.

**7.** Appareil d'imagerie selon la revendication 1, dans lequel
l'interface utilisateur désigne un point de regard qu'un utilisateur regarde comme position d'imagerie virtuelle.

**8.** Procédé d'imagerie comprenant :

l'utilisation des informations de distance d'une position d'imagerie à un sujet et des informations de modèle pour générer une image virtuelle obtenue en imageant le sujet à partir d'une position d'imagerie virtuelle différente de la position d'imagerie à partir d'une image capturée obtenue en imageant le sujet à partir de la position d'imagerie, dans lequel les informations de modèle comportent des informations de connaissances pour faire face à l'occlusion en complétant un pixel d'une partie d'occlusion, étant occulté dans l'image capturée ;
la fourniture d'une interface utilisateur, IU, qui désigne la position d'imagerie virtuelle ;
l'interface utilisateur comportant :

une première unité d'opération qui fonctionne lorsqu'un centre d'un système de coordonnées sphériques exprimant la position d'imagerie virtuelle est déterminé ;
une deuxième unité d'opération qui fonctionne lorsqu'un angle d'azimut de la position d'imagerie virtuelle dans le système de coordonnées sphériques est modifié ;
une troisième unité d'opération qui fonctionne lorsqu'un angle d'élévation de la position d'imagerie virtuelle dans le système de coordonnées sphériques est modifié ; et
une quatrième unité d'opération qui fonctionne lorsqu'une distance entre le centre du système de coordonnées sphériques et la position d'imagerie virtuelle est modifiée ; dans lequel l'interface utilisateur comporte en outre une cinquième unité d'opération qui est exploitée lorsqu'une distance focale d'un appareil d'imagerie virtuelle lors de la réalisation d'une imagerie virtuelle à partir de la position d'imagerie virtuelle est changée ;

et dans lequel l'interface utilisateur modifie une quantité de changement de la position d'imagerie virtuelle ou de la distance focale en fonction d'un temps pendant lequel l'une quelconque des première à cinquième unités d'opération fonctionne ;

dans lequel l'image virtuelle est transmise à une unité d'affichage en temps réel et dans lequel le procédé comprend l'affichage, dans l'image virtuelle, de la partie d'occlusion de sorte que l'utilisateur peut reconnaître la partie d'occlusion.

9. Programme permettant d'amener un ordinateur à fonctionner en tant que :

une unité de génération (7, 9, 11) qui utilise des informations de distance entre une position d'imagerie et un sujet et des informations de modèle pour générer une image virtuelle obtenue en imageant le sujet à partir d'une position d'imagerie virtuelle différente de la position d'imagerie à partir d'une image capturée obtenue en imageant le sujet à partir de la position d'imagerie, dans lequel les informations de modèle comportent des informations de connaissances permettant de faire face à l'occlusion en complétant un pixel d'une partie d'occlusion, étant occulté dans l'image capturée ;

une interface utilisateur, IU, qui désigne la position d'imagerie virtuelle ;

dans lequel l'IU comporte :

une première unité d'opération qui fonctionne lorsqu'un centre d'un système de coordonnées sphériques exprimant la position d'imagerie virtuelle est déterminé ;

une deuxième unité d'opération qui fonctionne lorsqu'un angle d'azimut de la position d'imagerie virtuelle dans le système de coordonnées sphériques est modifié ;

une troisième unité d'opération qui fonctionne lorsqu'un angle d'élévation de la position d'imagerie virtuelle dans le système de coordonnées sphériques est modifié ; et

une quatrième unité d'opération qui fonctionne lorsqu'une distance entre le centre du système de coordonnées sphériques et la position d'imagerie virtuelle est modifiée ; dans lequel l'IU comporte en outre une cinquième unité d'opération qui fonctionne lorsqu'une distance focale d'un appareil d'imagerie virtuelle lors de la réalisation d'une imagerie virtuelle à partir de la position d'imagerie virtuelle est modifiée ;

et l'interface utilisateur est configurée pour modifier une quantité de changement de la position d'imagerie virtuelle ou de la distance focale en fonction d'un temps pendant lequel l'une quelconque des première à cinquième unités d'opération fonctionne ;

dans lequel l'image virtuelle est transmise à une unité d'affichage en temps réel et la partie d'occlusion est affichée, dans l'image virtuelle, de sorte que l'utilisateur peut reconnaître la partie d'occlusion.

# FIG. 1

BUILDING

PERSON

IMAGING APPARATUS

TOP DIAGRAM

BUILDING

IMAGING APPARATUS

PERSON

FRONT DIAGRAM

IMAGING APPARATUS

PERSON

BUILDING

RIGHT SIDE DIAGRAM

EP 4 075 789 B1

# FIG. 2

BUILDING

PERSON

IMAGING APPARATUS

A

CAPTURED IMAGE   BUILDING

PERSON

B

EP 4 075 789 B1

## FIG. 3

BUILDING

PERSON

CAPTURED IMAGE    BUILDING

PERSON

B

A

IMAGING APPARATUS

EP 4 075 789 B1

# FIG. 4

BUILDING

PERSON

IMAGING APPARATUS

TOP DIAGRAM

IMAGING APPARATUS

BUILDING

PERSON

FRONT DIAGRAM

IMAGING APPARATUS

PERSON

BUILDING

RIGHT SIDE DIAGRAM

EP 4 075 789 B1

# FIG. 5

CAPTURED IMAGE   BUILDING

PERSON

# FIG. 6

- BUILDING
- PERSON
- IMAGING APPARATUS
- WALL

EP 4 075 789 B1

## FIG. 7

EP 4 075 789 B1

## FIG. 8

——————⌐ SUBJECT

⌐ IMAGING APPARATUS

TOP DIAGRAM

IMAGING APPARATUS

⌐ SUBJECT

FRONT DIAGRAM

IMAGING APPARATUS

⌐ SUBJECT

RIGHT SIDE DIAGRAM

EP 4 075 789 B1

## FIG. 9

# FIG. 10

# FIG. 11

ACTUAL IMAGING

GENERATION OF VIRTUAL SUBJECT

VIRTUAL IMAGING
(IMAGING FROM VIRTUAL IMAGING POSITION)

EP 4 075 789 B1

37

## FIG. 12

SECOND SUBJECT

FIRST SUBJECT

IMAGING APPARATUS

TOP DIAGRAM

IMAGING APPARATUS

FIRST SUBJECT

SECOND SUBJECT

FRONT DIAGRAM

IMAGING APPARATUS

FIRST SUBJECT

SECOND SUBJECT

RIGHT SIDE DIAGRAM

EP 4 075 789 B1

## FIG. 13

# FIG. 14

## FIG. 15

EP 4 075 789 B1

## FIG. 16

SECOND SUBJECT

SECOND OBJECT PLANE

FIRST SUBJECT

FIRST OBJECT PLANE

$d$

$L_{obj\_T2}$

$L_{obj\_T}$

LENS

$L_{img\_T}$

IMAGING PLANE

A

SECOND SUBJECT
FIRST SUBJECT
SECOND SUBJECT

CAPTURED IMAGE

B

EP 4 075 789 B1

# FIG. 17

SECOND SUBJECT

M    M

FIRST SUBJECT

LENS
(AT TIME OF SHORT-DISTANCE IMAGING)

LENS
(AT TIME OF LONG-DISTANCE IMAGING)

## FIG. 18

SHORT-DISTANCE CAPTURED IMAGE
BY WIDE-ANGLE LENS

SECOND SUBJECT

FIRST SUBJECT

MAPPING

$$X_{img\_T2} = k_2 \cdot X_{img\_W2}$$

MAPPING

$$X_{img\_T} = k \cdot X_{img\_W}$$

VIRTUALLY GENERATED
LONG-DISTANCE CAPTURED IMAGE
BY TELEPHOTO LENS

SECOND SUBJECT

FIRST SUBJECT

EP 4 075 789 B1

FIG. 19

# FIG. 20

SECOND SUBJECT

M          M

FIRST SUBJECT

p202    p201    p203

LENS
(AT TIME OF SHORT-DISTANCE IMAGING)

LENS
(AT TIME OF LONG-DISTANCE IMAGING)

## FIG. 21

ACTUAL IMAGING

PHYSICAL IMAGING POSITION

PHYSICAL SPACE SUBJECT

PERSPECTIVE PROJECTION TRANSFORMATION (PHYSICAL LENS OPTICAL SYSTEM)

ACTUAL CAPTURED IMAGE

DISTANCE MEASUREMENT

DISTANCE INFORMATION

GENERATION OF VIRTUAL SUBJECT

PAST CAPTURED IMAGE

VIRTUAL SUBJECT MODEL (WITH MISSING PORTION)

PERSPECTIVE PROJECTION INVERSE TRANSFORMATION

BUILDING DATA

OCCLUSION PORTION COMPLEMENTATION

AUXILIARY CAPTURED IMAGE

WEATHER INFORMATION

COPING MODEL INFORMATION

VIRTUAL IMAGING (IMAGING FROM VIRTUAL IMAGING POSITION)

VIRTUAL IMAGING POSITION DESIGNATION

VIRTUAL SUBJECT (MISSING PORTION COMPLEMENTED)

PERSPECTIVE PROJECTION TRANSFORMATION

VIRTUAL CAPTURED VIDEO

EP 4 075 789 B1

*FIG. 22*

## FIG. 23

TOP DIAGRAM

FRONT DIAGRAM

RIGHT SIDE DIAGRAM

EP 4 075 789 B1

FIG. 24

UI

TOP

LEFT  C  RIGHT

BTM

SHORT  TELE

LONG  WIDE

EP 4 075 789 B1

FIG. 25

EP 4 075 789 B1

## FIG. 26

```
            ┌─────────────┐
            │    START    │
            └──────┬──────┘
                   │
                   ▼                                              S1
┌────────────────────────────────────────────────────────────────┐
│ GENERATE VIRTUAL IMAGE CAPTURED FROM VIRTUAL IMAGING POSITION    │
│ DIFFERENT FROM CAPTURED IMAGE FROM CAPTURED IMAGE BY USING       │
│ DISTANCE INFORMATION AND COPING MODEL INFORMATION                │
│ (KNOWLEDGE INFORMATION) FOR COPING WITH OCCLUSION                │
└────────────────────────────────────────────────────────────────┘
                   │
                   ▼
            ┌─────────────┐
            │     END     │
            └─────────────┘
```

```
                                                              S11
┌──────────────────────────────────────────────────────────────┐
│ GENERATE THREE-DIMENSIONAL DATA (VIRTUAL SUBJECT) BY           │
│ PERFORMING PERSPECTIVE PROJECTION INVERSE TRANSFORMATION OF    │
│ CAPTURED IMAGE USING DISTANCE INFORMATION                      │
└──────────────────────────────────────────────────────────────┘
                          │
                          ▼                                   S12
┌──────────────────────────────────────────────────────────────┐
│ USE COPING MODEL INFORMATION TO COMPLEMENT OCCLUSION PORTION   │
│ THAT IS OCCLUSION WHEN THREE-DIMENSIONAL DATA (VIRTUAL         │
│ SUBJECT) IS VIEWED FROM VIRTUAL IMAGING POSITION TO GENERATE   │
│ CORRECTED MODEL (THREE-DIMENSIONAL DATA IN WHICH OCCLUSION     │
│ PORTION IS COMPLEMENTED) OBTAINED BY CORRECTING                │
│ THREE-DIMENSIONAL DATA                                         │
└──────────────────────────────────────────────────────────────┘
                          │
                          ▼                                   S13
┌──────────────────────────────────────────────────────────────┐
│ USE CORRECTED MODEL TO GENERATE VIRTUAL IMAGE OBTAINED BY      │
│ IMAGING CORRECTED MODEL FROM VIRTUAL IMAGING POSITION BY       │
│ PERSPECTIVE PROJECTION TRANSFORMATION                          │
└──────────────────────────────────────────────────────────────┘
```

# FIG. 27

EP 4 075 789 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019103126 A

- US 2019220963 A1

**Non-patent literature cited in the description**

- Peeking behind objects: Layered depth prediction from a single image. **DHAMO HELISA et al.** PATTERN RECOGNITION LETTERS. ELSEVIER, 06 May 2019, vol. 125, 333-340